# EUROPEAN PATENT APPLICATION

(11) **EP 3 641 372 A1**
(43) Date of publication of application: **22.04.2020**
(21) Application number: 18818090.5
(22) Date of filing: 20.04.2018
(51) Int. Cl.: H04W 12/12, H04W 12/02, H04W 4/40

(54) **V2X COMMUNICATION DEVICE AND DATA COMMUNICATION METHOD THEREOF**

(30) Priority: 11.06.2017 US 201762517988 P; 22.06.2017 US 201762523698 P
(71) Applicant: LG Electronics Inc., Seoul 07336 (KR)
(72) Inventor: KIM, Soyoung, Seoul 06772 (KR)
(74) Representative: Katérle, Axel
(86) International application number: PCT/KR2018/004629
(87) International publication number: WO 2018/230833

(57) **Abstract**

Disclosed is a V2X communication method of a V2X communication device. The V2X communication method can comprise the steps of: detecting misbehavior of a V2X communication device; determining whether or not the V2X communication device is in a potential misbehavior detection state; if the V2X communication device is in a potential misbehavior detection state, determining a reaction mode of the V2X communication device; and performing a predetermined operation in accordance with the reaction mode. The reaction mode can comprise at least one of a first mode, for deactivating a V2X communication function of the V2X communication device, a second mode, for activating only a reception function of the V2X communication device, and a third mode for activating the reception function and a limited transmission function of the V2X communication device.

## Description

### [Technical Field]

The present disclosure relates to a device for vehicle-to-everything (V2X) communication, and a data communication method, and more particularly, to management of misbehavior detection of a V2X communication device.

### [Background Art]

In recent years, a vehicle has become a result of industrial convergence technology in which an electric technology, an electronic technology, and a communication technology are mixed, rather than a result of mechanical engineering technology. For this reason, the vehicle is also called a smart car. The smart car will provide not only a traditional vehicular technology such as traffic safety and solving traffic congestion, but also various user-customized transport services in future by connecting a driver, a vehicle, a transport infrastructure, and the like to one another. Such a connectivity may be implemented by using a vehicle-to-everything (V2X) communication technology. A system providing connectivity of a vehicle may also be referred to as a connected vehicle system.

### [Disclosure]

### [Technical Problem]

In a future traffic system, an OBE of a vehicle and RSEs of roadside devices, and roadside non-vehicle participants perform V2X communication based on an ad-hoc technique. The V2X communication is performed for a vehicle/non-vehicle to share information on a state thereof and information on a surrounding environment and prevent an accident, damage of a human life, and a property loss which occur on a road. V2X communication technology has been developed to enhance resource utilization efficiency in terms of an entire traffic system by optimizing resource consumption (e.g., traffic congestion) which occurs on the road as well as a safety-related purpose.

Various information shared through the V2X communication should be protected from various security issues including exposure of a private life of a message sending subject, generation of wrong information due to a device error of the message sending subject, information manipulation by a selfish intention of a message transferring subject, message forgery by a third party during a message transfer process, and the like.

### [Technical Solution]

According to an embodiment of the present disclosure, a V2X communication method of a V2X communication device includes: detecting misbehavior of the V2X communication device; determining whether the V2X communication device is in a potential misbehavior detection state; if the V2X communication device is in the potential misbehavior detection state, determining a reaction mode of the V2X communication device; and performing a predetermined operation according to the reaction mode, in which the reaction mode may include at least one of a first mode for deactivating a V2X communication function of the V2X communication device, a second mode for activating only a reception function of the V2X communication device, and a third mode for activating the reception function and a limited transmission function of the V2X communication device.

As the embodiment, in the determining of whether the V2X communication device is in the potential misbehavior detection state, when the misbehavior of the V2X communication device is detected by the V2X communication device itself or when the misbehavior of the V2X communication device is detected by a neighborhood V2X communication device in the vicinity of the V2X communication device, it may be determined that the V2X communication device is in the potential misbehavior detection state.

As the embodiment, the performing of the predetermined operation according to the reaction mode when the reaction mode is the first mode may include revoking certificates for verifying a V2X message, and deactivating transmission and reception functions of the V2X message.

As the embodiment, the performing of the predetermined operation according to the reaction mode when the reaction mode is the second mode may include revoking the certificates for verifying the V2X message, and deactivating the transmission function of the V2X message.

As the embodiment, the performing of the predetermined operation according to the reaction mode when the reaction mode is the third mode may include activating a limited transmission function of the V2X communication device, and the limited transmission function may be used for transmission of a predefined specific V2X message and the specific V2X message may include information indicating that the V2X communication device is in the potential misbehavior detection state.

As the embodiment, the neighborhood V2X communication device may be a V2X communication device which operates as a misbehavior broker generating certificate revocation list (CRL) information.

As the embodiment, the neighborhood V2X communication device may broadcast the CRL information and the CRL information may include information for revoking the certificate of the V2X communication device.

According to an embodiment of the present disclosure, a V2X communication device includes: a secure/non-secure storage device storing data; an RF unit transmitting and receiving a radio signal; and a processor controlling the RF unit, in which the processor may be configured to: determine whether the V2X communication device is in a potential misbehavior detection state, if the V2X communication device is in the potential misbehavior detection state, determine a reaction mode of the V2X communication device, and perform a predetermined operation according to the reaction mode, and the reaction mode may include at least one of a first mode for deactivating a V2X communication function of the V2X communication device, a second mode for activating only a reception function of the V2X communication device, and a third mode for activating a limited transmission function of the V2X communication device.

As the embodiment, in the determining of whether the V2X communication device is in the potential misbehavior detection state, when the misbehavior of the V2X communication device is detected by the V2X communication device itself or when the misbehavior of the V2X communication device is detected by a neighborhood V2X communication device in the vicinity of the V2X communication device, it may be determined that the V2X communication device is in the potential misbehavior detection state.

As the embodiment, the performing of the predetermined operation according to the reaction mode when the reaction mode is the first mode may include revoking the certificates for verifying the V2X message, and deactivating transmission and reception functions of the V2X message.

As the embodiment, the performing of the predetermined operation according to the reaction mode when the reaction mode is the second mode may include revoking the certificates for verifying the V2X message, and deactivating the transmission function of the V2X message.

As the embodiment, the performing of the predetermined operation according to the reaction mode when the reaction mode is the third mode may include activating a limited transmission function of the V2X communication device, and the limited transmission function may be used for transmission of a predefined specific V2X message and the specific V2X message may include information indicating that the V2X communication device is in the potential misbehavior detection state.

As the embodiment, the neighborhood V2X communication device may be a V2X communication device which operates as a misbehavior broker generating certificate revocation list (CRL) information.

As the embodiment, the neighborhood V2X communication device may broadcast the CRL information and the CRL information may include information for revoking the certificate of the V2X communication device.

### [Advantageous Effects]

According to an embodiment of the present disclosure, three misbehavior detection methods for misbehavior detection are proposed. Through the methods, a V2X communication device can perform safe and efficient misbehavior detection.

According to an embodiment of the present disclosure, proposed is a method in which a misbehavior detection state is not simply divided into a healthy state and a definite state, but a potential state which is an intermediate state thereof is defined, and the V2X communication device which is in the potential state, performs an operation restricted according to a misbehavior detection level. This ensures flexible V2X communication by restricting only some functions according to a misbehavior detection level, rather than immediately excluding a V2X communication device in which a misbehavior is detected from the V2X communication.

According to an embodiment of the present disclosure, through the convergence of a misbehavior detection technique and a misbehavior broker technique, coverage of the V2X communication with respect to misbehavior processing can be broadened.

According to an embodiment of the present disclosure, proposed is a method for managing/maintaining the misbehavior detection state and transmitting information thereon. In this way, a receiving V2X communication device can check whether a transmitting V2X communication device transmitting data is a V2X communication device in which the misbehavior is detected and the resulting appropriate operation can be performed.

Hereinafter, effects of the present disclosure will be additionally described together with a description of a configuration.

### [Description of Drawings]

FIG. 1 illustrates a cooperative intelligent transport system according to an embodiment of the present disclosure.
FIG. 2 illustrates a trust message communication method of a vehicle-to-everything (V2X) communication system according to an embodiment of the present disclosure.
FIG. 3 illustrates communication between V2X communication devices according to an embodiment of the present disclosure.
FIG. 4 illustrates a protocol stack of a V2X communication device according to an embodiment of the present disclosure.
FIG. 5 illustrates a protocol stack of a V2X communication device providing a security service according to a first embodiment of the present disclosure.
FIG. 6 illustrates a method in which a V2X communication device performs security processing according to an embodiment of the present disclosure.
FIG. 7 illustrates a structure of a trust hierarchy according to an embodiment of the present disclosure.
FIG. 8 illustrates a bootstrap process of a V2X communication device operated as an end entity according to an embodiment of the present disclosure.
FIG. 9 illustrates a misbehavior reporting process of a V2X communication device operated as an end entity according to an embodiment of the present disclosure.
FIG. 10 illustrates a protocol stack of a V2X communication device providing a security service according to a second embodiment of the present disclosure.
FIG. 11 illustrates a trust model of a V2X communication system according to an embodiment of the present disclosure.
FIG. 12 illustrates a flow of information in a trust model of a V2X communication system according to an embodiment of the present disclosure.
FIG. 13 illustrates a security life cycle of a V2X communication device according to an embodiment of the present disclosure.
FIG. 14 illustrates a method for detecting misbehavior in an ITS system according to an embodiment of the present disclosure.
FIG. 15 illustrates a reaction mode of PMBD ITS-S according to an embodiment of the present disclosure.
FIG. 16 is a flowchart showing an operation of ITS-S having multiple reaction modes according to an embodiment of the present disclosure.
FIG. 17 illustrates an MBD state of ITS-S and a change process of the MBD state according to an embodiment of the present disclosure.
FIG. 18 illustrates a secure life cycle of ITS-S according to an embodiment of the present disclosure.
FIG. 19 illustrates signed PDU including MBD related information according to an embodiment of the present disclosure.
FIG. 20 illustrates a method in which ITS-S transmits MBD related information by using signed PDU according to an embodiment of the present disclosure.
FIG. 21 illustrates a method in which ITS-S is issued with EC according to an embodiment of the present disclosure.
FIG. 22 illustrates a method in which ITS-S operating as MBB is issued with EC according to an embodiment of the present disclosure.
FIG. 23 illustrates an ITS reference architecture for providing an MBD service according to an embodiment of the present disclosure.
FIG. 24 illustrates an MBB and MBD communication method according to an embodiment of the present disclosure.
FIG. 25 illustrates a configuration of a V2X communication device according to an embodiment of the present disclosure.
FIG. 26 illustrates a communication method of a V2X communication device according to an embodiment of the present disclosure.

### [Mode for Invention]

Exemplary embodiments of the present disclosure will be described in detail, and examples thereof are illustrated in the accompanying drawings. The detailed description, which will be given below with reference to the accompanying drawings, is intended to explain exemplary embodiments of the present disclosure, rather than to show only embodiments that may be implemented according to the present disclosure. The following detailed description includes specific details in order to provide a thorough understanding of the present disclosure. However, it will be apparent to those skilled in the art that the present disclosure may be practiced without such specific details. In the present disclosure, respective embodiments described below need not be used separately. Multiple embodiments or all embodiments may be used together and a combination of specific embodiments may be also be used.

Although most terms used in the present disclosure have been selected from general ones widely used in the art, some terms have been arbitrarily selected by the applicant and their meanings are explained in detail in the following description as needed. Therefore, the present disclosure should be understood based upon the intended meanings of the terms rather than their simple names or meanings.

The present disclosure relates to a vehicle-to-everything (V2X) communication device, in which the V2X communication device may be included in an intelligent transport system (ITS) to perform all or part of functions of the ITS. The V2X communication device may perform vehicle-to-vehicle communication, vehicle-to-infrastructure communication, vehicle-to-bicycle communication, vehicle-to-mobile communication, and the like. According to an embodiment, the V2X communication device may be an on board unit (OBU) of a vehicle, or may be included in an OBU. The OBU may also be referred to as an on board equipment (OBE). The V2X communication device may be a roadside unit (RSU) of an infrastructure, or may be included in an RSU. The RSU may also be referred to as a roadside equipment (RSE). Alternatively, the V2X communication device may be an ITS station, or may be included in the ITS station. Any OBU, RSU, mobile equipment, or the like that performs V2X communication may be collectively referred to as an ITS station. Alternatively, the V2X communication device may be a wireless access in vehicular environments (WAVE) device, or may be included in the WAVE device. The V2X communication device may also be abbreviated to V2X device.

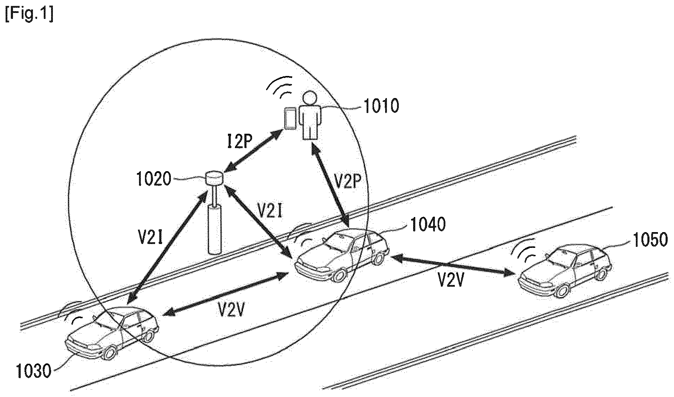

FIG. 1 illustrates a cooperative intelligent transport system (C-ITS) according to an embodiment of the present disclosure.

The C-ITS is a system in which an information communication, control, and electronic technology is added to the existing transport system to improve efficiency in transport management and improve user convenience and safety. In the C-ITS, in addition to a vehicle, a transport infrastructure system such as a traffic light and an electronic display also performs V2X communication, and such an infrastructure may also be abbreviated to RSU as described above.

As illustrated in FIG. 1, in the C-ITS, a pedestrian device 1010, an RSU 1020, and vehicles 1030, 1040, and 1050, each of which includes the V2X communication device, perform communication with one another. According to an embodiment, the V2X communication may be performed based on a communication technology of IEEE 802.11p. The communication technology based on IEEE 802.11p may also be referred to as dedicated short-range communication (DSRC). According to an embodiment, the V2X communication based on IEEE 802.11p may be short-range communication within a range of about 600 m. Through the V2X communication, a cooperative awareness message (CAM) or a decentralized environmental notification message (DENM) may be broadcasted.

The CAM is distributed in an ITS network, and provides information regarding at least one of a presence, a location, or a communication state of the ITS station. The DENM provides information regarding a detected event. The DENM may provide information regarding any traveling situation or an event detected by the ITS station. For example, the DENM may provide information regarding a situation such as an emergency electronic brake light, an automobile accident, a vehicle problem, and traffic conditions.

In FIG. 1, the vehicles 1030 and 1040 are present within a communication coverage of the RSU 1020. However, the vehicle 1050 is present outside the communication range of the RSU 1020, and thus may not directly perform communication with the RSU.

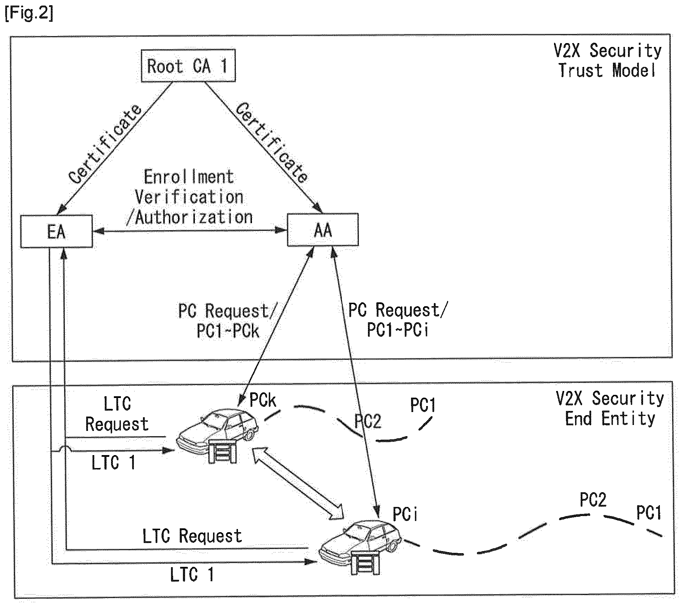

FIG. 2 illustrates a trust message communication method of a V2X communication system according to an embodiment of the present disclosure.

According to an embodiment illustrated in FIG. 2, the V2X communication system may be a security system required for V2X communication devices (e.g., an ITS station or a WAVE device) to safely send and receive a message for V2X communication. Such a V2X communication system may include one or more entities for trusted communication for a message. For example, the V2X communication system may include a root certificate authority (CA), an enrollment authority (EA), an authorization authority (AA), and/or at least one V2X communication device, as illustrated in FIG. 2. According to an embodiment, the V2X communication device may be an OBE, or an RSE.

The root CA may provide the EA and the AA with a proof to issue enrollment credentials. Such a root CA may define authorities and duties of the EA and the AA, certify the EA and the AA, and check performance of the duties by the EA and the AA. As such, the EA and AA may be controlled by the root CA.

The EA is an entity serving to manage a life cycle of the enrollment credentials, and may certify the V2X communication device and grant an access to V2X communication. The EA may also be referred to as a long-term certificate authority. Such an EA may issue an enrollment certificate (EC). The V2X communication device may have the EC for certification of whether the sending V2X communication device is a certified V2X sending device. The EC may also be referred to as a long term certificate (LTC).

The AA is an entity serving to issue an authorization ticket (AT) and monitor use of the AT, and may provide the V2X communication device with an authoritative proof to allow the V2X communication device to use a specific V2X service. The AA may also be referred to as a short-term certificate authority or a pseudonym certificate authority. Such an AA may issue the AT. The V2X communication device may have the AT for authentication of a V2X message (e.g., CAM or DENM) received by the V2X communication device. The AT may also be referred to as a short-term certificate or a pseudonym certificate (PC).

The V2X communication device may acquire the right to access V2X communication from the EA, and may negotiate with the AA for the right to call a V2X service. For example, the V2X communication device may request the EA for the EC (LCT), and acquire the EC from the EA. Further, the V2X communication device may request the AA for the AT (PC), and acquire the EC from the EA. In addition, the V2X communication device may send and receive a V2X message. For example, the V2X communication device may perform communication for a trust message with another V2X communication device by using the EC and the AT. Further, the V2X communication device may forward a receive V2X message to another V2X communication device. In the present specification, a V2X communication device sending a V2X message is referred to as a sending V2X communication device, a V2X communication device receiving a V2X message is referred to as a receiving V2X communication device, and a V2X communication device forwarding a received V2X communication device to another V2X communication device is referred to as a relaying V2X communication device.

A method in which V2X communication devices in the V2X communication system (security system) including the entities described above perform trust message communication will be described below in detail with reference to the respective drawings.

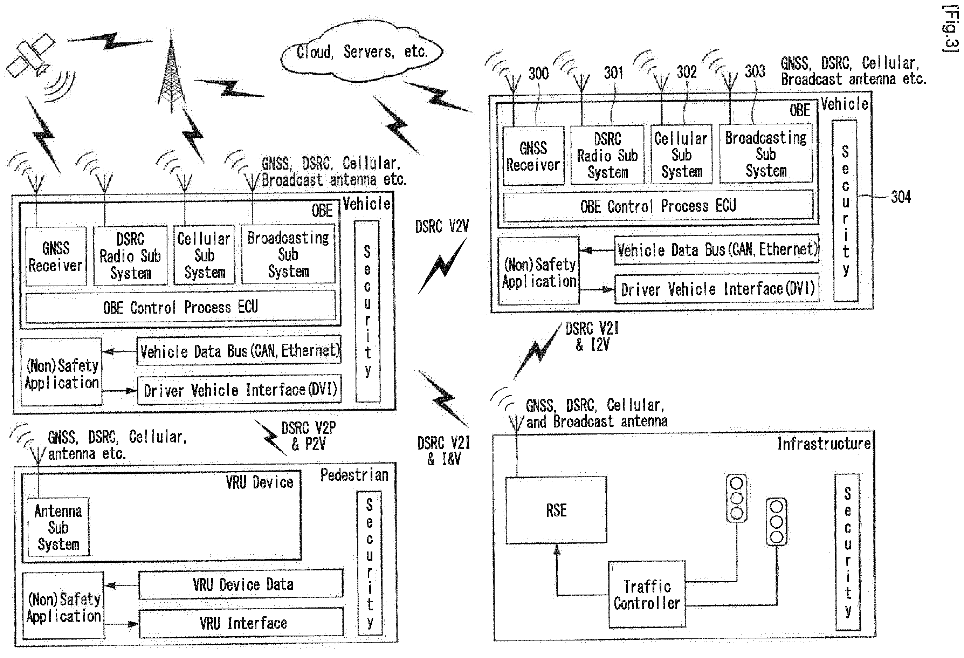

FIG. 3 illustrates communication between V2X communication devices according to an embodiment of the present disclosure.

In a connected vehicle system, V2X communication devices mounted in a vehicle, an infrastructure, and a personalized device of a pedestrian may include device components illustrated in FIG. 3, respectively.

A description of components included in a V2X communication device of a vehicle according to an embodiment illustrated in FIG. 3 will be provided below. A V2X communication device of a vehicle may further include an OBE. According to an embodiment, the OBE may include a plurality of antenna systems and an OBE control process electronic control unit (ECU). Antenna system components may be integrated with each other or may be individually provided. Alternatively, a combination of some of the antenna system components may be included.

Global navigation satellite system (GNSS): A satellite navigation system that uses a radio wave transmitted from a satellite to calculate a location, a height, and a speed of a moving object across the earth, which may correspond to an antenna and a subsystem thereof included in a V2X communication device of a vehicle and configured to obtain location information of the vehicle
Dedicated short range communication (DSRC) radio subsystem: An antenna and a subsystem thereof for sending/reception according to a DSRC protocol
Cellular subsystem: An antenna and a subsystem thereof for cellular data communication
Broadcasting subsystem: An antenna and a subsystem thereof for sending/reception of broadcasting data

OBE control process ECU: The OBE control process ECU may be abbreviated to a controller or a processor. The controller may process a data message received from a plurality of heterogeneous systems and control other ECUs in the vehicle to perform appropriate operation. The controller may execute an application for the data processing and vehicle control/operation. Further, the controller may process sensing data received from other electronic equipment or sensors in the vehicle and send the processed sensing data to external V2X communication devices/vehicles. According to an embodiment, all information in the vehicle may be converted into a standardized format that is sharable through the controller. As illustrated in FIG. 3, a safety application may be executed to send and receive information to and from a bus such as a controller area network (CAN) or Ethernet in the vehicle. Further, information may be provided to a user through a driver vehicle interface (DVI) such as a stereo and a display in the vehicle.

The V2X communication device configured as described above may perform communication with an infrastructure, a pedestrian, and a supported system such as a cloud/server, in addition to another vehicle.

A description of components included in a V2X communication device of an infrastructure according to an embodiment illustrated in FIG. 3 will be provided below. A V2X communication device of an infrastructure may include an RSE. Similarly to the OBE of the vehicle, the RSE may include a plurality of antenna systems and a controller (processor). Antenna system components may be integrated with each other or may be individually provided. Alternatively, a combination of some of the antenna system components may be included. Meanwhile, the controller of the RSE may perform operations that are the same as or similar to those of the controller of the OBE. For example, the controller of the RSE may process a data message received from a plurality of heterogeneous systems and control other ECUs in the infrastructure to perform appropriate operation.

The RSE may receive information from a traffic controller to perform communication with a vehicle. The RSE may be a fixed device, and may be backend-connected to be operated as a provider. However, according to an embodiment, the RSE may collect information from a vehicle and send the information again, and thus the RSE may be operated not only as a provider device, but also as a user device.

A description of components included in a V2X communication device of a personalized device (VRU device) of a pedestrian according to an embodiment illustrated in FIG. 3 will be provided below. The V2X communication device of the VRU device may include a plurality of antenna systems and a controller (processor). Antenna system components may be integrated with each other or may be individually provided. Alternatively, a combination of some of the antenna system components may be included. Meanwhile, the controller of the VRU device may perform operations that are the same as or similar to those of the controller of the OBE. For example, the controller of the VRU device may process a data message received from a plurality of heterogeneous systems and control other ECUs in the personalized device to perform appropriate operation. The controller may execute an application for the data processing and control/operation of the personalized device. Further, the controller may process sensing data received from other electronic equipment or sensors in the personalized device and send the processed sensing data to external V2X communication devices. As illustrated in FIG. 3, a safety application may be executed to send and receive information to and from components in the personalized device. Further, information may be provided to a user through a VRU interface such as a stereo and a display in the personalized device.

As illustrated in FIG. 3, communication between vehicles may be referred to as V2V communication, communication between a vehicle and an infrastructure may be referred to as V2I communication or I2V communication, and communication between a vehicle and a personalized device of a pedestrian may be referred to as V2P communication or P2V communication. As illustrated in FIG. 3, communication between vehicles using DSRC may be referred to as DSRC V2V communication, communication between a vehicle and an infrastructure using DSRC may be referred to as DSRC V2I communication or DSRC I2V communication, and communication between a vehicle and a personalized device of a pedestrian using DSRC may be referred to as DSRC V2P communication or DSRC P2V communication. Meanwhile, communication between a vehicle and another V2X communication device may be collectively referred to as V2X communication, and communication between a V2X communication device and another V2X communication device may be collectively referred to as X2X communication.

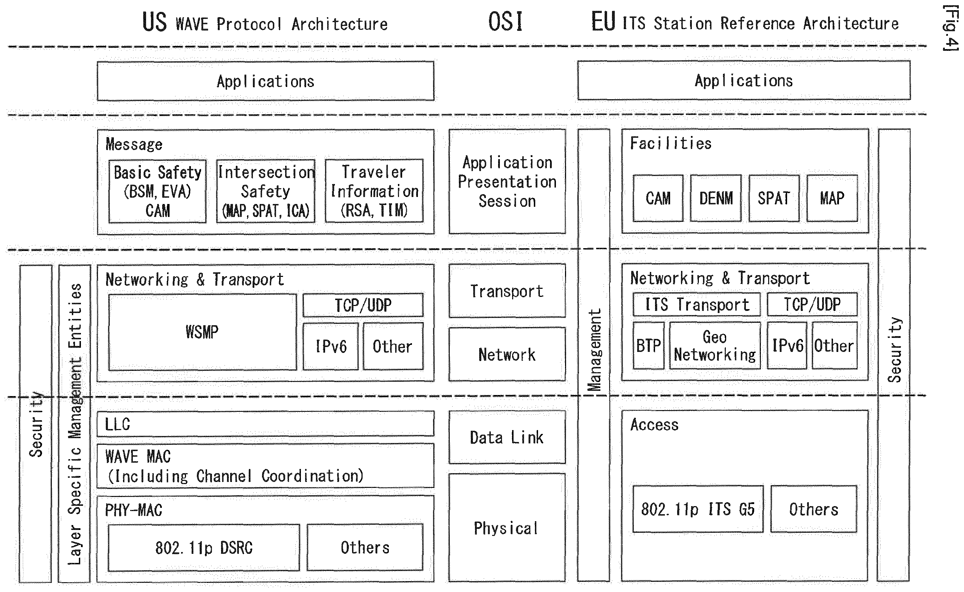

FIG. 4 illustrates a protocol stack of a V2X communication device according to an embodiment of the present disclosure. Specifically, FIG. 4 illustrates a protocol stack of a V2X communication device of United States (US) or Europe (EU) according to an embodiment of the present disclosure.

The V2X communication devices illustrated in FIG. 3 may perform communication with one another by using a communication protocol for V2X communication illustrated in FIG. 4.

Description of respective layers illustrated in FIG. 4 is provided below.

Applications layer: The applications layer may implement and support various use cases. For example, an application may provide information regarding road safety, efficient traffic information, information regarding other applications.

Facilities layer: The facilities layer is a layer corresponding to open systems interconnection (OSI) layer 5 (session layer), OSI layer 6 (presentation layer), and OSI layer 7 (application layer). The facilities layer may support effective implementation of various use cases defined in the applications layer. For example, the facilities layer may provide an application programming interface (API) for encoding/decoding a message for supporting an application. According to an embodiment, the message may be encoded/decoded in abstract syntax notation one (ASN.1).

A service and a message set provided in the facilities layer is defined by the Society of Automotive Engineers (SAE) in U.S., and is defined by Intelligent Transport Systems (ITS) of European Telecommunications Standards Institute in Europe. For example, a basic safety message (BSM) for supporting a basic safety application, an emergency vehicle alert (EVA) message, a MAP (mapdata) message for supporting an intersection safety application, a signal phase and timing (SPAT) message, an intersection collision alert (ICA) message, a roadside alert (RSA) message for supporting a traveler information application, a traveler information message (TIM), and the like may be provided as the message set in U.S. A cooperative awareness message (CAM), a decentralized environmental notification message (DENM), and the like may be provided as the message set in Europe.

Networking/transport layer: The networking/transport layer is a layer corresponding to OSI layer 3 (network layer) and OSI layer 4 (transport layer). The networking/transport layer may configure a network for vehicle communication between homogenous/heterogeneous networks by using various transport protocols and network protocols. For example, the networking/transport layer may provide Internet access and routing using the Internet protocol such as TCP/UDP+IPv6. Alternatively, the networking/transport layer may configure a vehicle network by using a geographical-position-based protocol such as basic transport protocol (BTP)/GeoNetworking. Alternatively, the networking/transport layer may configure a vehicle network by using a WAVE short message protocol (WSMP) (e.g., WSMP-N and WSMP-T).

Further, the networking/transport layer may provide an advertisement of provided services. For example, such an advertisement may be provided through WAVE service advertisement (WSA) in U.S., and may be provided through a service announcement message (SAM) in Europe.

Access layer: The access layer is a layer corresponding to OSI layer 1 (physical layer) and OSI layer 2 (data link layer). The access layer may send, on a physical channel, a message/data received from a higher layer. For example, the access layer may perform/support data communication based on at least one of a communication technology based on IEEE 802.11 and/or 802.11p standard, a WIFI physical transmission technology based on IEEE 802.11 and/or 802.11p standard, a DSRC technology, a 2G/3G/4G (LTE)/ 5G wireless cellular communication technology including satellite/broadband wireless mobile communication, a global positioning system (GPS) technology, Bluetooth, or a WAVE technology based on IEEE 1609. Meanwhile, in U.S., a medium access control (MAC) technology based on IEEE 1609.4 standard is complemented and used to support communication in a vehicle environment.

Security layer: The security layer is a layer for data trust and privacy. The security layer may provide an authentication function and an encryption function for assuring privacy. The authentication is used to indicate whether or not a sender is a certified V2X communication device and whether or not data are changed, and the encryption is used to keep secrets in data. According to an embodiment, the message or data generated in the networking/transport layer may be sent after being secured through the security layer according to a type of the message or data, or may be sent in a non-secured state.

Management layer: The management layer may provide multi-channel decentralized congestion control (MDCC). Further, the management layer may generate contents for a service advertisement based on information received from a higher layer, and the contents may include IP configuration information and security credential information. Further, the management layer may monitor the received service advertisement and estimate a channel quality to determine a channel allocation/switching schedule.

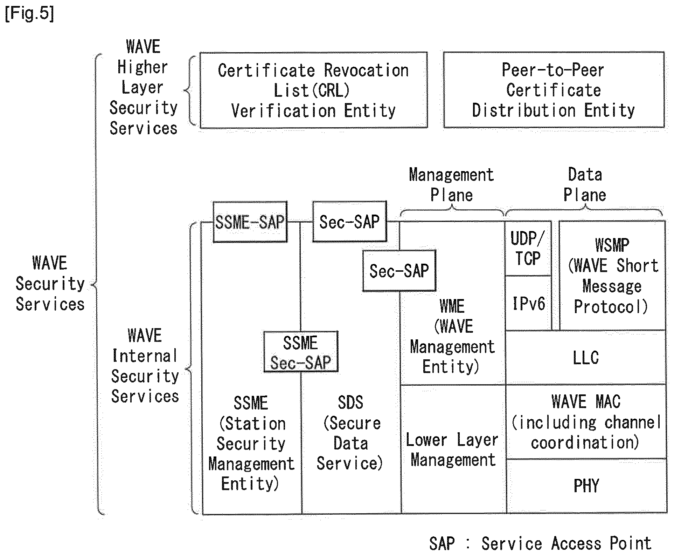

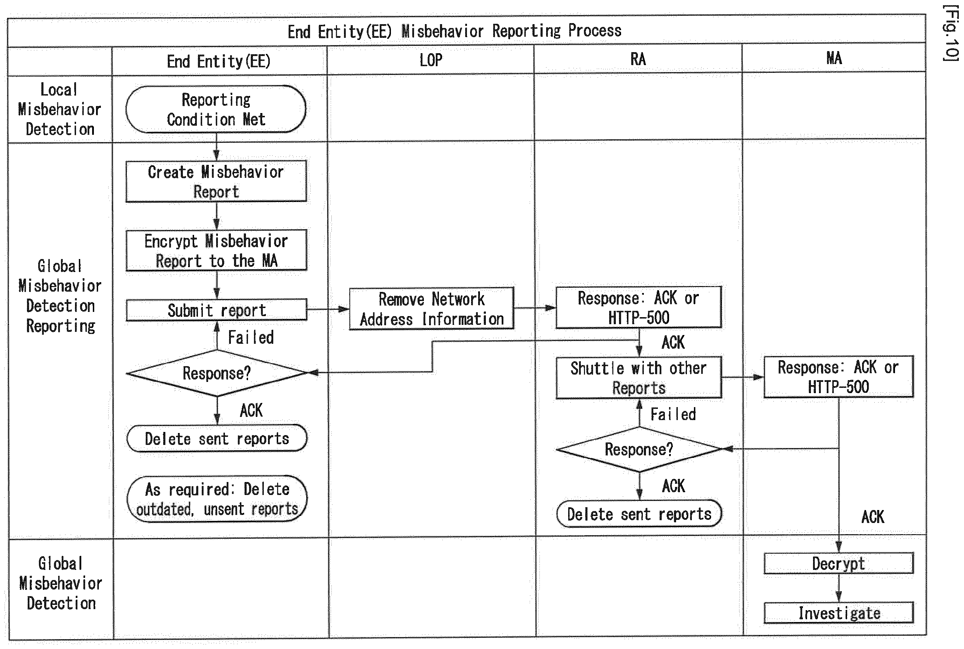

Hereinafter, a method in which a first type V2X communication device provides a security service will be described with reference to FIGS. 5 to 9, and a method in which a second type V2X communication device provides a security service will be described with reference to FIGS. 10 to 13. According to an embodiment, the first type V2X communication device may be a V2X communication device performing V2X communication according to the communication protocol of United States (US) in FIG. 4, and may be a V2X communication device performing V2X communication according to the communication protocol of Europe (EU) in FIG. 4

FIG. 5 illustrates a protocol stack of a V2X communication device providing a security service according to a first embodiment of the present disclosure. According to an embodiment illustrated in FIG. 5, the V2X communication device may be a V2X communication device (e.g., WAVE device) providing a security service based on IEEE 1609.2 standard. The security service in FIG. 5 may be referred to as a WAVE security service, and the protocol stack in FIG. 5 may be referred to as a WAVE protocol stack. The security service illustrated in FIG. 5 may include an internal security service and a higher layer security service.

First, the internal security service may provide a secure data service (SDS) and a security services management entity (SSME).

The SDS may manage a protocol data unit (PDU). For example, the SDS may convert an unsecured PDU into a secured PDU (SPDU). Further, the SDS may perform processing of the SPDU at the time of reception, and in this processing, the SPDU is converted into a PDU. In this case, a format of the SPDU may be signed data or encrypted data. An entity using the secure data service may be referred to as a secure data exchange entity (SDEE).

The SSME may manage information regarding certificates. For example, the SSME may store/manage certificates stored in the SDS and certificate information regarding certificates belonging to certificate authorities (CA).

The higher layer security service may provide a certificate revocation list verification entity (CRLVE) and a peer-to-peer certificate distribution entity (P2PCDE).

The CRLVE may verify an incoming certificate revocation list (CRL). For example, the CRLVE may verify a CRL received from the SSME or to be forwarded to the SSME. Further, the CRLVE may forward relevant revocation information to the SSME for storage.

The P2PCDE enables peer-to-peer certificate distribution. The P2PCDE allows the WAVE device to learn unknown certificates. In this case, the WAVE device may request another peer device for necessary information and learn the unknown certificates by using the information.

In order to provide the above-described service, IEEE 1609.2 standard illustrated in FIG. 5 provides a service access point (SAP) (e.g., Sec-SAP, SSME SAP, and SSME-Sec SAP), and communication from one entity to another entity based on IEEE 1609.2 standard may be performed through the SAP. Such a communication may be referred to as data exchange between SDEEs.

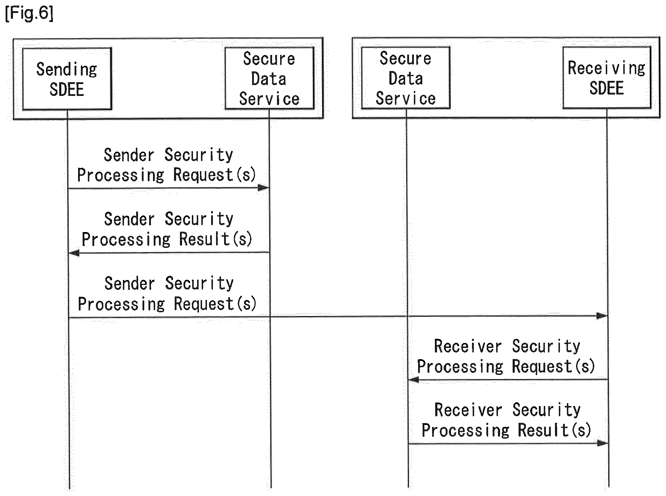

FIG. 6 illustrates a method in which a V2X communication device performs security processing according to an embodiment of the present disclosure. Similarly to FIG. 5, according to an embodiment illustrated in FIG. 6, the V2X communication device may be a V2X communication device (e.g., WAVE device) providing a security service based on IEEE 1609.2 standard. The embodiment illustrated in FIG. 6 shows an illustrative flow of security processing using the SDS.

Referring to FIG. 6, the SDS may be called by the SDEE together with a request for processing data. The processed data may be returned to the SDEE that performs the call. The secure data exchange may include two SDEEs, one of which may be a sending SDEE, and the other of which may be a receiving SDEE.

The sending SDEE may call the SDS to perform security processing for sending. In this case, a result of the processing may be an SPDU returned to a sending entity. The sending SDEE may call the SDS at least once, if possible, may call the SDS multiple times before sending the SPDU.

The receiving SDEE may call the SDS to perform security processing for contents of the received SPDU. In this case, a result of the processing that may include the SPDU and additional information regarding the SPDU may be returned to the receiving SDEE. Complete processing of the received SPDU may require multiple calls.

Hereinafter, a security management system for managing credentials of a public key infrastructure (PKI) will be described. For example, a certificate request, certificate management, a CRL distribution, and the like, through the security management system will be described. The security management system may also be referred to as a security credentials management system (SCMS) or a trust model.

Before describing the security management system, various types of certificates managed by the security management system will be described first. The V2X communication system supports various types of certificates, and the security management system may issue and revoke the certificates. The respective certificates may have different lifetimes and renewal frequencies. For example, the root CA may have a lifetime of 17 years, and the EA controlled by the root CA may have a lifetime of 11 years, and the EC issued by the EA may have a lifetime of 6 years.

First, a vehicle or an OBE of a vehicle may have an OBE enrollment certificate (EC), a pseudonym certificate (PC), and/or an identification certificate (IC). The EC of the OBE is a certificate used to verify a certificate request, and may serve as a passport of the OBE. The vehicle may request the AA for the PC and/or the IC by using the EC. The EC does not have an encryption key and may be issued while the OBE performs a bootstrap process. Further, the EC has a limited validity period. Therefore, the EC is not valid during an entire operation lifetime of the OBE, and a re-establishment process may be required. Further, each EC may have at least one provider service ID (PSID).

The PC is an authorization certificate that indicates permission of a holder but does not indicate an identity of the holder. The PC may be used for authentication of a V2X message such as a BSM, misbehavior reporting, and the like. The PC does not have an encryption key, and one OBE may have a plurality of valid PCs for privacy. Therefore, the PC may be changed as often as possible if needed.

The IC may be used for authentication in a V2I application. The IC has a provisioning process similar to that of the PC, but may have a PSID and a parameter different from those of the PC.

An infrastructure or an RSE (or RSU) of an infrastructure may have an RSE enrollment certificate (EC) and/or an application certificate (AC).

The EC of the RSE is a certificate used to verify a certificate request, and may serve as a passport of the RSE. The EC may be used to request the AC. Similarly to the EC of the OBE, the EC of the RSE does not have an encryption key and may be issued while the RSE performs a bootstrap process. Further, the EC of the RSE has a limited validity period, similarly to the EC of the OBE. Therefore, the EC is not valid during an entire operation lifetime of the RSE, and a re-establishment process may be required. Further, each EC may have at least one PSID.

The AC may be used by one RSE for authentication and encryption. The AC has an encryption key and does not have privacy constraints for the RSE. Therefore, the RSE may have only one valid AC for a given application at a time. Revocation of the AC according to two periods is exemplified as follows.
1. Short validity periods (e.g., daily or hourly): Since the certificate needs to be renewed frequently, the CRL is not required.
2. Long validity periods (e.g., monthly or annually): The CRL is required.

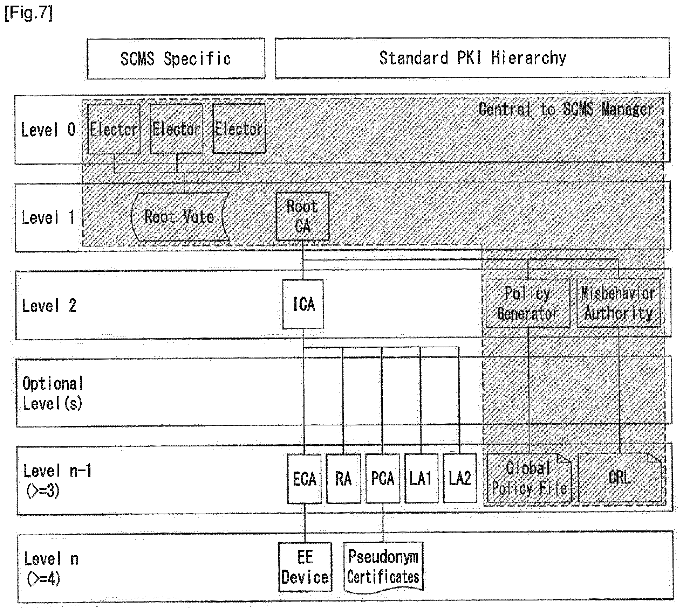

FIG. 7 illustrates a structure of a trust hierarchy according to an embodiment of the present disclosure. The embodiment illustrated in FIG. 7 shows an example of a security management system of an elector-based scheme using a certificate format defined by IEEE 1609.2.

According to the embodiment illustrated in FIG. 7, certificates issued by an elector, a root CA, a pseudonym certificate authority (PCA), and an intermediate certificate authority, respectively, are explicit type certificates for supporting peer-to-peer (P2P) distribution. The explicit type certificates keep explicitness to avoid confusion while other certificates are implicit. Further, the explicit type certificates do not have privacy constraints.

In the security management system of the elector-based scheme according to the embodiment illustrated in FIG. 7, electors are added to Level 0, which is the topmost level, such that the root CA may receive a new supporter from the electors without changing a certificate thereof, which is advantageous. The electros may perform a root management function. That is, the electors may be used to manage (e.g., add or delete) the root CA certificate. For example, the electors may add or delete the root CA certificate. Here, a quorum may be, for example, more than half of members. Meanwhile, an elector certificate is not part of a PKI hierarchy of the security management system, and thus a verifying certificate chain does not include a verifying elector certificate.

The root CA certificate is a self-signed certificate that may be used as a trust anchor to verify other certificates, and may be abbreviated to a root certificate. The root CA certificate has the following characteristics different from those of other types of certificates.
1. The trust chain terminates with the root CA certificate. Therefore, verification of all certificates of the security management system terminates with the root CA certificate.
2. A signature of the root CA does not have any encryption value. The signature is generated by the root CA itself.
3. In general, the root CA certificate has a long lifetime. This is because a change of the root CA is an operation that is significantly time consuming and requires a large value.
4. However, only the quorum of electors may generate a root management message and add revocation of the root CA certificate to the CRL.

The ICA certificate may be used to issue a certificate to another SCSM. Only the root CA and the ICA may certify another SCSM. The ICA certificate may be referred to as an IC.

The ECA certificate is an explicit type certificate and may be distributed through P2P distribution. The ECA certificate may be used to issue a certificate (EC) to end entities including an OBE and an RSE. The ECA certificate may be referred to as an EC.

The PCA certificate may be used to issue a certificate to end entities including an OBE and an RSE. The PCA certificate has a limited validity period, and revocation of the PCA certificate may be performed through a CRL issued by a CRL generator. The PCA certificate may be referred to as a PC.

A CRL generator certificate may be issued by the root CA and may be used to sign the CRL. A policy generator certificate may also be issued by the root CA and may be used to sign a global policy file to be distributed to the security management system. A linkage authority (LA) certificate may not interact with an end entity. A registration authority (RA) certificate needs to have a validity period long enough to successfully request certificate provisioning after an end entity is bootstrapped. A misbehavior authority (MA) certificate may not have a long validity period, since an end entity need not frequently retrieve the MA certificate.

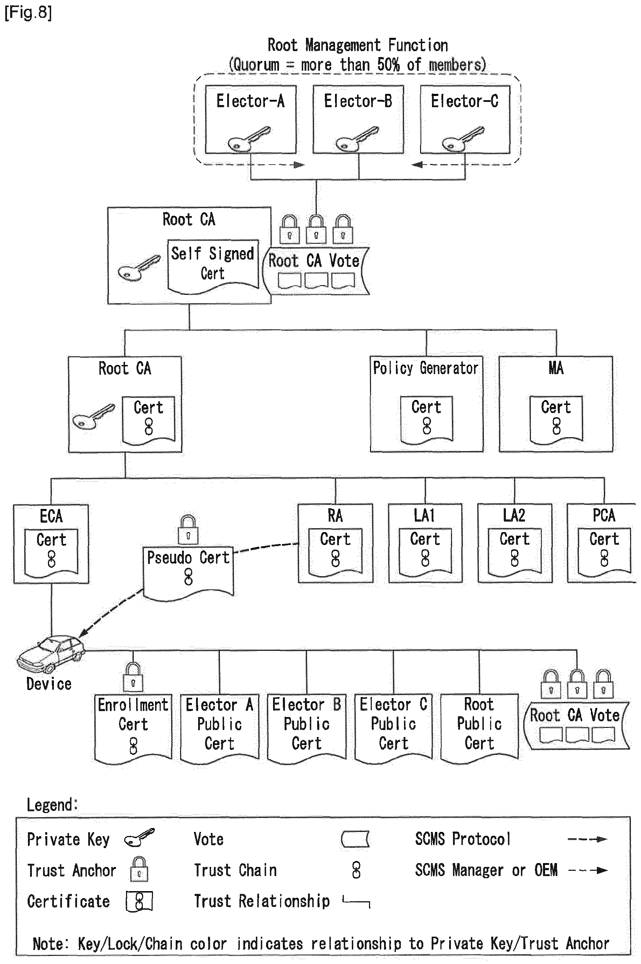

FIG. 8 illustrates a bootstrap process of a V2X communication device operated as an end entity according to an embodiment of the present disclosure. As described above, the EC may be issued by performing such a bootstrap process.

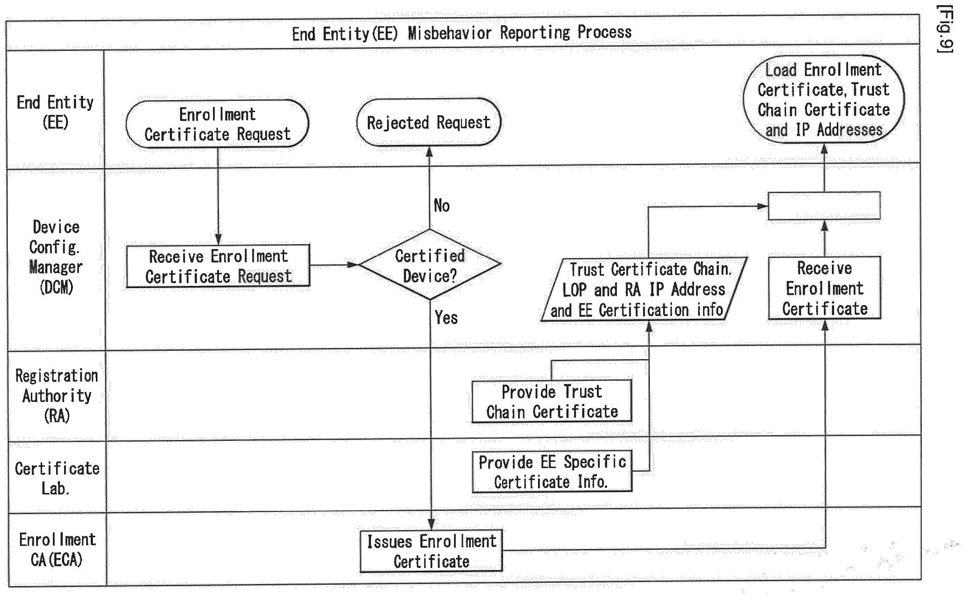

In the present specification, an end entity (EE) may be an entity that is not operated as a CA, that is, an entity requesting a certificate or signing a PDU. For example, a vehicle or an OBE of a vehicle illustrated in FIG. 9 may be operated as the EE.

As illustrated in FIG. 8, in the case in which an EC request is received from the EE, a device configuration manager (DCM) may determine whether or not the corresponding EE is certified. That is, the DCM may determine whether or not the corresponding EE is a certified device. In the case in which the EE is not a certified device, the DCM may reject the EC request.

In the case in which the EE is a certified device, the DCM may request the ECA for an EC. In this case, the ECA may issue the EC and forward the EC to the DCM. The DCM may forward, to the EE, the EC issued by the ECA, a trust chain certificate provided from the RA, and/or EE specific certificate information provided from a certificate lab. At this time, the DCM may also forward an IP address to the EE. The EE may load the EC, the trust chain certificate, and/or the IP address.

FIG. 9 illustrates a misbehavior reporting process of a V2X communication device operated as an end entity according to an embodiment of the present disclosure. Similarly to the embodiment illustrated in FIG. 8, for example, a vehicle or an OBE of a vehicle may be operated as the EE.

As illustrated in FIG. 9, the EE may report that a preset condition is met (Step 1).

The EE may create a misbehavior report. At this time, the EE may sign the misbehavior report by using the PC (Step 2).

The EE may encrypt the misbehavior report to be sent to the MA (Step 3).

The EE may submit the misbehavior report to the RA (Step 4).

At this time, a location obscurer proxy (LOP) may remove network address information (e.g., an MAC address and/or an IP address) from the encrypted misbehavior report, and then forward the misbehavior report to the RA (Step 4.1). The RA may shuffle the misbehavior report with other reports and forward the shuffled reports to the MA (Step 4.2). Here, a shuffling threshold may be, for example, 10,000 misbehavior reports or one day.

The MA may decrypt the misbehavior report and perform investigation based on the decrypted misbehavior report.

If an ACK response is received from the RA, the EE may delete the sent reports. Further, the EE may delete an outdated or unsent report. Further, if an ACK response is received from the MA, the RA may delete the sent reports.

Table 1 shows security-related services and PSIDs of the services in U.S.

**[Table 1]**

| ITS service (application) | |
|---|---|
| Numerical value | Description |
| 32 = 0x20 | BSM PSID |
| 35 = 0x23 | Security Manamgement PSID |
| 38 = 0x26 | Misbehavior Reporint PSID |
| 135 = 0x87 | WAVE WSA |
| 136 = 0x88 | Peer To Peer Certificate Distribution PSID |

FIG. 10 illustrates a protocol stack of a V2X communication device providing a security service according to a second embodiment of the present disclosure. According to an embodiment illustrated in FIG. 10, the V2X communication device may be a V2X communication device (e.g., ITS station) providing a security service based on the ETSI ITS standard in Europe. The security service in FIG. 10 may be referred to as an ITS security service, and a security layer in FIG. 10 may be referred to as an ITS security layer.

FIG. 10 shows functional entities of an ITS security architecture and a relationship between the functional entities and ITS communication layers. FIG. 10 shows the security layer as a vertical layer adjacent to the ITS communication layers, but, in fact, the security service is provided on a layer-by-layer basis. Therefore, the security layer may be subdivided into ITS layers. Such a security service may be provided on a layer-by-layer basis in a manner in which each security service is operated in one or several ITS architecture layers, or in a security management layer. As illustrated in FIG. 10, the functional entities of the ITS security architecture and the ITS communication layers may perform communication through a SAP (e.g., SF-SAP, SN-SAP, and SI-SAP).

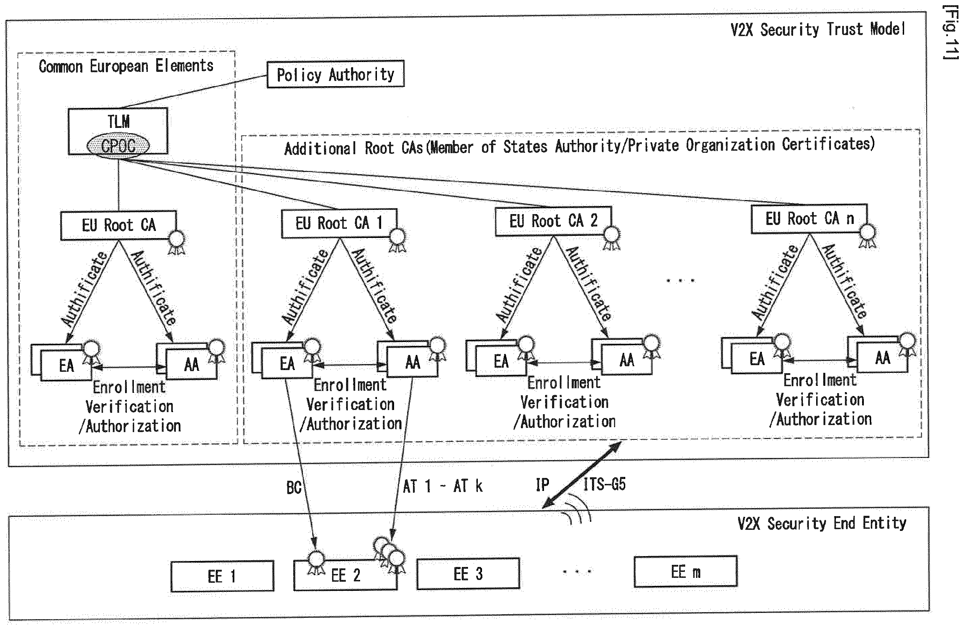

FIG. 11 illustrates a trust model of a V2X communication system according to an embodiment of the present disclosure. A description of the embodiment illustrated in FIG. 11 overlapping with the description provided with reference to FIG. 2 will be omitted. The trust model according to the embodiment illustrated in FIG. 11 may be referred to as an ITS trust model or a C-ITS trust model.

According to an embodiment of FIG. 11, the V2X communication system may be a security system required for V2X communication devices (e.g., an ITS station) to safely send and receive a message for V2X communication. Such a V2X communication system may include one or more entities for trusted communication for a message. For example, the V2X communication system may include a policy authority (PA), a trust list manager (TLM), at least one root CA, an EA, an AA, and/or at least one V2X communication device, as illustrated in FIG. 11. According to an embodiment, the V2X communication device may be an OBE, or an RSE. The root CA, the EA, and the AA have been described above with reference to FIG. 2, and thus the PA, the TLM, and the like will be described below.

A representative of public and private interested parties (e.g., a public institution, a road operator, and a vehicle manufacturer) participating in the ITS trust model acts as the PA.

The PA may designate the TLM. Specifically, the PA may designate and authorize the TLM and a central point of contact (CPOC) for operation in the ITS trust system. The PA may determine whether or not the root CA is trustable, and notifies the TLM of approved/revoked root CA certificates to approve/cancel root CA operation in an ITS trust domain. In other words, the PA may grant the root CA operation and perform confirmation so that the TLM may trust the root CA.

The TLM serves to generate and sign a list of the root CA certificates and TLM certificates. The signed list issued by the TLM may be referred to as an European certificate trust list (ECTL). As such, the TLM may issue the ECTL and the ECTL may provide trust for approved root CAs.

The CPOC is a unique entity designated by the PA, and serves to guarantee communication exchange between the root CAs, collect the root CA certificates, and provide the collected root CA certificates to the TLM. The CPOC also serves to distribute the ECTL to any entity of interest in the trust model. According to an embodiment the TLM may store security certificate information and trust list information (ECTL) in a local storage. In this case, the CPOC may be used to distribute such an information to all PKI participants.

The EA may forward the EC to the ITS station (EE) to provide trust for operation of the EE. The AA may issue the ATs to the ITS stations having trust from the EA. Therefore, a receiving ITS station or a sending ITS station may trust another ITS station. This is because the ATs are issued by the AA, the corresponding AA is certified by the root CA for trustability, and the root CA is certified by the TLM and the PA.

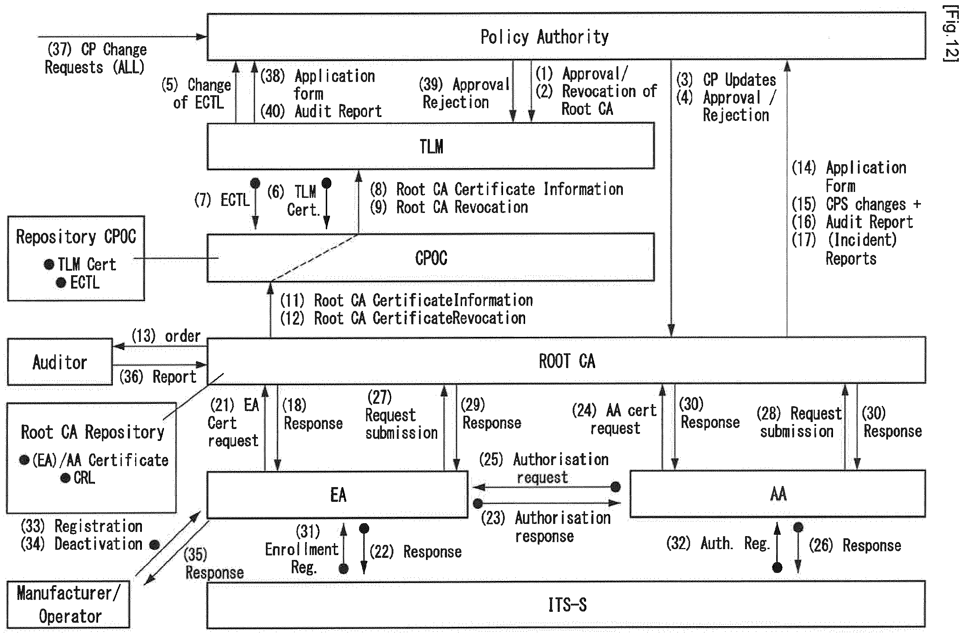

FIG. 12 illustrates a flow of information in a trust model of a V2X communication system according to an embodiment of the present disclosure. Specifically, FIG. 12 illustrates a flow of information in a trust model of an ITS station participating in the PKI. In the embodiment illustrated in FIG. 12, it is basically assumed that there are multiple root CAs. Certificates of the root CAs may be periodically sent to a CPOC through a security protocol such as a link certificate. Here, a security protocol to be used may be defined in the CPOC.

Referring to (1) and (2) in FIG. 12, a PA may perform an approval of a root CA application with respect to a TLM, and may provide information regarding revocation of a root CA. Referring to (3) and (4) in FIG. 12, the PA may update a certification policy (CP), and approve or reject a root CA application form/certificate practice statement (CPS) request change/audit process.

Referring to (5) in FIG. 12, the TLM may notify the PA of a change of an ECTL. Referring to (6) and (7) in FIG. 12, the TLM may provide TLM certificates and the ECTL to a C-ITS point of contact (CPOC).

Referring to (8) and (9) in FIG. 12, the CPOC may forward root CA certificate information and root CA revocation to the TLM. Referring to (10) in FIG. 12, the CPOC may forward the TLM certificates to all EEs.

Referring to (11) and (12) in FIG. 12, the root CA may forward root CA certificate information and root CA certificate revocation to the CPOC. Referring to (13) in FIG. 12, the root CA may forward an audit order to an auditor. Referring to (14), (15), and (16) in FIG. 12, the root CA may forward an application form, update CPS changes, and provide an audit report. Other operations are as described by the figures.

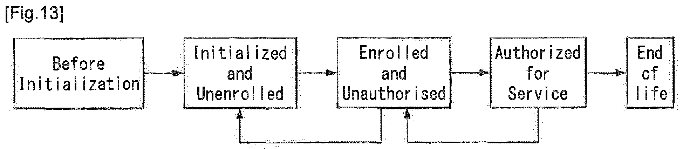

FIG. 13 illustrates a security life cycle of a V2X communication device according to an embodiment of the present disclosure. According to an embodiment illustrated in FIG. 13, the V2X communication device may be an ITS station based on the ETSI ITS standard. A security lifecycle of FIG. 13 may be referred to as an ITS-S security life cycle.

Referring to FIG. 13, the security life cycle may include an initial ITS station configuration step during manufacturing, an enrollment step, an authorization step, an operation and maintenance step, and a lifetime expiration step.

In the initial ITS station configuration step as part of a manufacturing process, an identity of the station and relevant information elements need to be set in the ITS station itself or the EA. For example, the information elements in the ITS station may include a unique identifier, contact information (e.g., a network address and a public key certificate) with respect to the EA and the AA that may issue a certificate for the ITS station, a set of currently known trusted EA certificates that may be used by the ITS station to start an enrollment procedure, a set of currently known trusted AA certificates that may be used by the ITS station to trust communication with another ITS station, and/or public/private key pairs for encryption, a trust anchor (root CA) public key, and a DC network address. Alternatively, the information elements in the EA may include a permanent identifier of the ITS station, profile information regarding the ITS station, and/or a public key from key pairs belonging to the ITS station.

In the enrollment step, the ITS station may request the EA for an EC. After a successful enrollment procedure, the ITS station may process enrollment credentials to be used for the following authentication request. In the case in which the EA updates the EC, the ITS station needs to forward an enrollment request signed by the previous valid enrollment credentials issued by the EA.

In the authorization step, the ITS station may request the AA for an AT. In the case of a "service authorization" state, the ITS station may have a set of ATs permitting sending of a signed message to another ITS station without revealing the identity or the enrollment credentials of the sending ITS station. When complete sets of the ATs run out, the ITS station may not sign sending of a message to another ITS station, and may return to the enrolled state.

In the maintenance step, if the EA or AA is added to or eliminated from the system, the root CA may notify the ITS station of such a change.

The lifetime expiration step may be performed when a lifetime of the ITS station is expired or a negotiation (revocation determined by the issuing EA) occurs. In the lifetime expiration step, the ITS station is revoked and operation needs to be stopped in the ITS G5 communication network.

As described above, in the V2X communication system, a PKI-based trust model may be used to guarantee authentication of a V2X communication device (e.g., ITS station or WAVE device) and trustability of a V2X message (e.g., ITS message) sent and received by the V2X communication device. Certificates such as an EC (or LTC) and AT (or PC) are present in the trust model and each of the certificates may be used to authenticate the V2X communication device and the V2X message.

At this time, in the case in which a misbehavior of the V2X communication device is detected, security credentials of the corresponding V2X communication device, such as the EC/AT, need to be revoked and the corresponding V2X communication device needs to be excluded from the V2X communication. To this end, a method for generating and distributing a CRL to efficiently distribute misbehavior detection information is required. For example, in United States, a misbehavior authority (MA) is added to the trust model, and the MA may broadcast the CRL for the EE. In Europe, the root CA may generate a CRL for the CA, together with a certificate trust list (CTL). At this time, the root CA may generate and issue the CRL and the CTL in a form of signed lists, and forward the CRL and the CTL to a distribution center (DC). In this case, the V2X communication device may acquire information regarding a certificate revocation status by using the Internet protocol such as an online certificate status protocol (OCSP), and the DC may distribute the information to all EEs in a domain managed by a corresponding RCA.

Such a conventional method requires backend-connection with an infrastructure (e.g., RSU) for actual operation. Therefore, in the case in which there is no infrastructure around, the EE may not receive relevant information until entering into the next infrastructure region. Further, in the case of the MA in United States or the DC in Europe, there need to be multiple MAs or DCs for actual operation, rather than only one MA or DC. Therefore, a mechanism thereof becomes significantly complicated. Further, even in the case in which only one MA or DC is provided for operation, if the operated MA is hacked, all V2X communication is affected. Therefore, it is possible to implement safe V2X communication.

Hereinafter, three methods for detecting misbehavior in order to perform reliable V2X communication in a V2X communication system will be described.

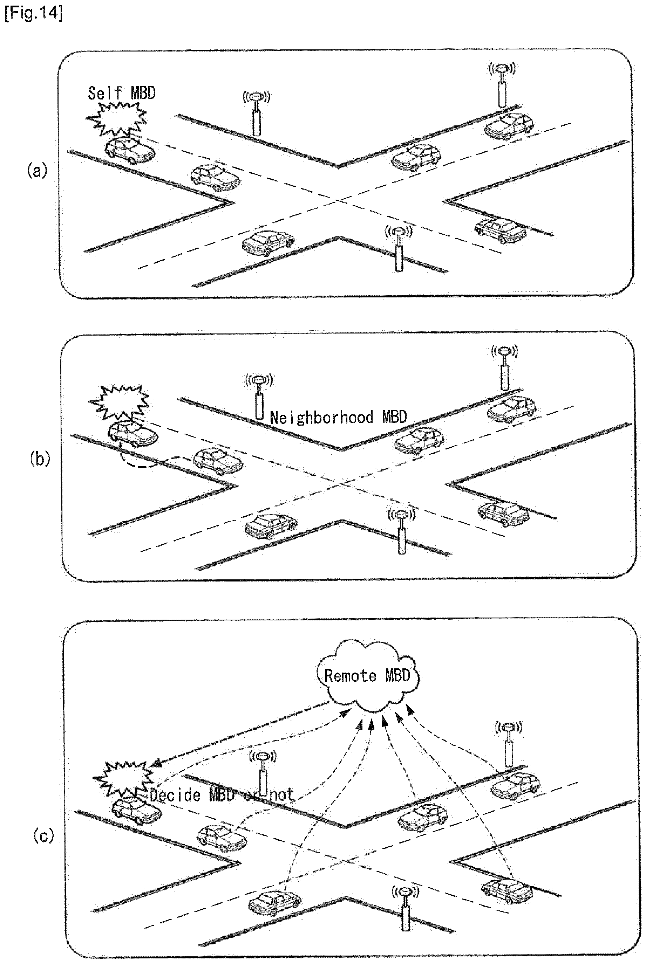

FIG. 14 illustrates a method for detecting misbehavior in an ITS system according to an embodiment of the present disclosure. In the present disclosure, ITS-S in which the misbehavior is detected is referred to as MBD ITS-S.

FIG. 14(a) illustrates a self MBD detecting method which is one of misbehavior detecting methods according to an embodiment of the present disclosure.

Self MBD detecting method (first MBD detecting method): Means a method in which the ITS-S detects/senses the misbehavior by itself. To this end, the ITS-S should support a light MBD detection function for detecting the misbehavior thereof.

In general, the ITS-S may sense abnormality thereof through the MBD detection function, but may not convince whether the sensed abnormality corresponds to the misbehavior and it is also difficult for the ITS-S to know an accurate cause thereof. Even though the ITS-S has a powerful MBD detection function, it is difficult for the ITS-S to detect all types of misbehaviors only by information acquired thereby. Accordingly, information received from another ITS-S in the vicinity of the ITS-S is collected and whether the misbehavior occurs needs to be detected based on the collected information. However, such a task corresponds to a task requiring so much time and effort. Accordingly, all ITS-S need not perform such a task.

FIG. 14(b) illustrates a neighborhood MBD detecting method which is one of misbehavior detecting methods according to an embodiment of the present disclosure.

Neighborhood MBD detecting method (second MBD detecting method): means a method in which surrounding ITS-S (neighborhood ITS-S) detects/senses the misbehavior of another ITS-S. When the misbehavior of another ITS-S is detected, the neighborhood ITS-S may directly inform the ITS-S (MBD ITS-S) in which the misbehavior is detected of misbehavior detection (MBD) information, broadcast the MBD information to surrounding ITS-S, or inform a target (e.g., MA) having an authority of the MBD information.

The neighborhood ITS-S should support an MBD detection function for detecting the misbehavior of another surrounding ITS-S. For example, the neighborhood ITS-S should support a function for detecting the misbehavior of another surrounding ITS-S by using information obtained from ITS messages such as CAM and DEMN received for V2X communication or collecting and analyzing additional information for the detection of the misbehavior.

When the MBD detecting method is used, neighborhood ITS-S which is not qualified may determine another ITS-S as the MBD ITS-S without a just reason and whether the ITS-S indicated as the MBD ITS-S by the neighborhood ITS-S accepts the indication becomes an issue. Further, when the MBD detecting method is used, there is an issue that several surrounding ITS-Ss conspire to create one ITS-S into the MBD ITS-S. In order to avoid a risk that healthy ITS-S is regarded as the MBD ITS-S by the neighborhood ITS-S, the neighborhood ITS-S that detects and announces the misbehavior of another surrounding ITS-S needs to be ITS-S of which reliability is ensured. For example, ITS-S having a misbehavior broker (MBB) authority to be described below may become the neighborhood ITS-S.

FIG. 14(c) illustrates a remote MBD detecting method which is one of misbehavior detecting methods according to an embodiment of the present disclosure.

Remote MBD detecting method (third MBD detecting method): means a method in which a station that manages an entire ITS system detects the misbehavior of the ITS-S. An entity that manages the entire ITS system may be referred to as a remote MBD station or management station.

When the MBD detecting method is used, it is advantageous in that the misbehavior detection having reliability of a predetermined level or higher is ensured. However, it is problematic in that a lot of time and efforts are required up to determination, announcement, and subsequent revocation of the misbehavior detection.

ITS-S of which misbehavior is primarily detected by the self MBD detecting method and/or neighborhood MBD detecting method is in a potential MBD state. The potential MBD state (potential state) corresponds to an intermediate state of a healthy MBD state (healthy state) and a definite MBD state (definite state). Hereinafter, three operation modes of the ITS-S in the potential MBD state will be described. In the present disclosure, the ITS-S which is in the potential MBD state is referred to as PMBD ITS-S. The MBD ITS-S described above may be appreciated as a concept including the ITS-S which is in the potential MBD state and the ITS-S which is in the definite MBD state.

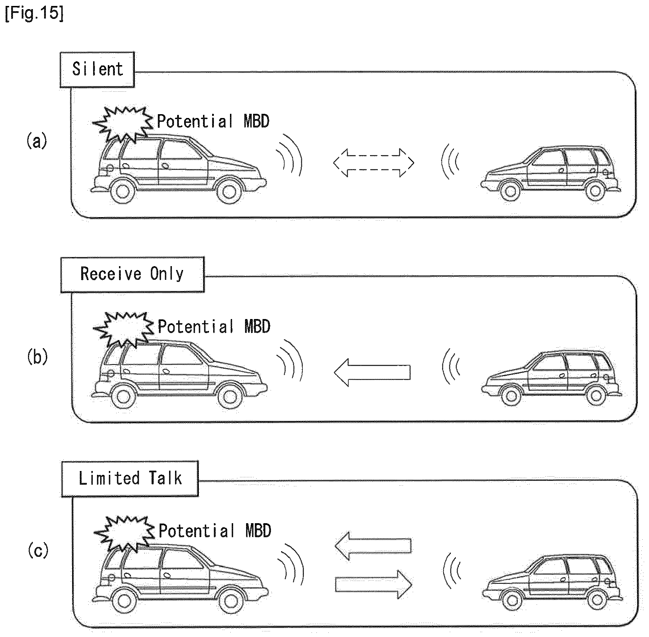

FIG. 15 illustrates a reaction mode of PMBD ITS-S according to an embodiment of the present disclosure. As an embodiment, the PMBD ITS-S may have three reaction modes (operation modes). For example, the PMBD ITS-S may include a silent mode, a receive only mode, and a limited talk mode as three reaction modes. Until the remote MBD station definitely determines whether the misbehavior occurs, the PMBD ITS-S may operate in one mode among following reaction modes.

FIG. 15(a) illustrates a silent mode which is one of reaction modes of the PMBD ITS-S according to an embodiment of the present disclosure.

Silent mode (first reaction mode or first operation mode): The mode means a mode in which the PMBD ITS-S is excluded from the V2X communication (ITS communication) and does not perform a V2X function. In other words, the PMBD ITS-S which operates in the silent mode may be completely excluded from the V2X communication.

FIG. 15(b) illustrates the receive only mode which is one of reaction modes of the PMBD ITS-S according to an embodiment of the present disclosure.

Receive only mode (second reaction mode or second operation mode): This mode means a mode in which the PMBD ITS-S may receive and process data (e.g., ITS message) from other ITS-Ss. Since the PMBD ITS-S just has a problem in information thereon, the PMBD ITS-S should receive and process information on another ITS-S for safety. The PMBD ITS-S which operates in the receive only mode depends on an MBD level to perform only reception. That is, the PMBD ITS-S that operates in the receive only mode may perform the V2X communication (ITS communication) for receiving data, but may not perform the V2X communication (ITS communication) for transmission of data.

FIG. 15(c) illustrates a limited talk mode which is one of reaction modes of the PMBD ITS-S according to an embodiment of the present disclosure.

Limited talk mode (third reaction mode or third operation mode): The mode means a mode in which the PMBD ITS-S maintains the V2X communication (ITS communication), but has the MBD level for the limited talk. The PMBD ITS-S which operates in the limited talk mode may perform only the limited talk depending on the MBD level. The ITS-S may determine whether to process data (e.g., ITS message) received from the PMBD ITS-S that operates in the limited talk mode.

The limited talk mode may be divided into two submodes. As an embodiment, the PMBD ITS-S may operate in one mode of the submodes according to the MBD level.

First submode: The submode means a mode in which the PMBD ITS-S may execute all healthy V2X applications. However, in the submode, the PMBD ITS-S should signal information for announcing that the PMBD ITS-S itself is the PMBD ITS-S. As such, in the case of the first submode, the PMBD ITS-S may perform all healthy V2X functions, but should signal the information for announcing that the PMBD ITS-S itself is the PMBD ITS-S together therewith.

As the embodiment, the PMBD ITS-S may encapsulate the information for announcing that the PMBD ITS-S itself is the PMBD ITS-S in a basic container of the ITS message such as CAM or DENM or signal the information in a scheme of encapsulating the information in a secure header/trailer. The receiving ITS-S that receives a message including the signaling information processes the message to verify that the ITS-S transmitting the corresponding ITS message is the PMBD ITS-S and determine whether to receive/process data transmitted in the corresponding PMBD ITS-S.

Second submode: The submode means a mode in which the PMBD ITS-S may not perform healthy V2X communication and limits to transmit only the limited ITS message. In other words, in the case of the second submode, the PMBD ITS-S may not execute all healthy V2X applications unlike the first submode. As the embodiment, the limited ITS message may include at least one of an emergency message, a message for announcing that the PMBD ITS-S itself is the MBD ITS-S, or a message transmitted to infrastructure such as RSU. Meanwhile, even in the case of the second submode, the PMBD ITS-S should signal the information for announcing that the PMBD ITS-S itself is the PMBD ITS-S like the first submode.

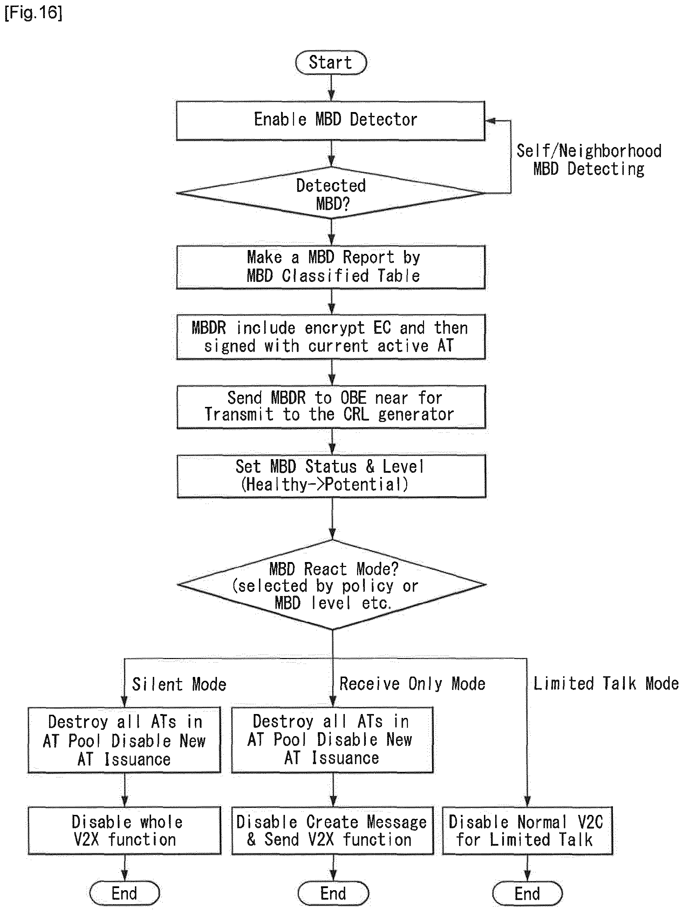

FIG. 16 is a flowchart showing an operation of ITS-S having multiple reaction modes according to an embodiment of the present disclosure.

Referring to FIG. 16, the ITS-S may enable an MBD detector.

The ITS-S may determine whether the misbehavior is detected. In an embodiment, the ITS-S may detect the misbehavior thereof by using the self MBD detecting method. In another embodiment, the ITS-S may detect the misbehavior of another surrounding ITS-S by using the neighborhood MBD detecting method.

When the misbehavior is not detected, the ITS-S may perform the self and/or neighborhood MBD detecting method. When the misbehavior is detected, the ITS-S may generate an MBD report (MBDR) by an MBD classified table.

The ITS-S may encapsulate encrypted EC in the MBDR and sign the MBDR with a current active AT.

The ITS-S may transmit the MBDR to ITS-S (e.g., OBE) in the vicinity thereof for transmission to a CRL generator.

The ITS-S may set the MBD state and level. For example, the ITS-S may change the MBD state from a healthy state to a potential state.

The ITS-S may determine an MBD reaction mode (reaction mode). In this case, the reaction mode may be selected by a policy or the MBD level.

When the reaction mode is the silent mode, the ITS-S may remove all ATs in an AT pool and disable issuing of a new AT. In addition, the ITS-S may disable all V2X functions.

When the reaction mode is the receive only mode, the ITS-S may remove all ATs in the AT pool and disable issuing of the new AT. In addition, the ITS-S may disable a V2X function for message generation and transmission.

When the reaction mode is the limited talk mode, the ITS-S may disable a normal V2X function for the limited talk. For example, the ITS-S may activate only a transmission function of some limited ITS messages and deactivate the remaining functions.

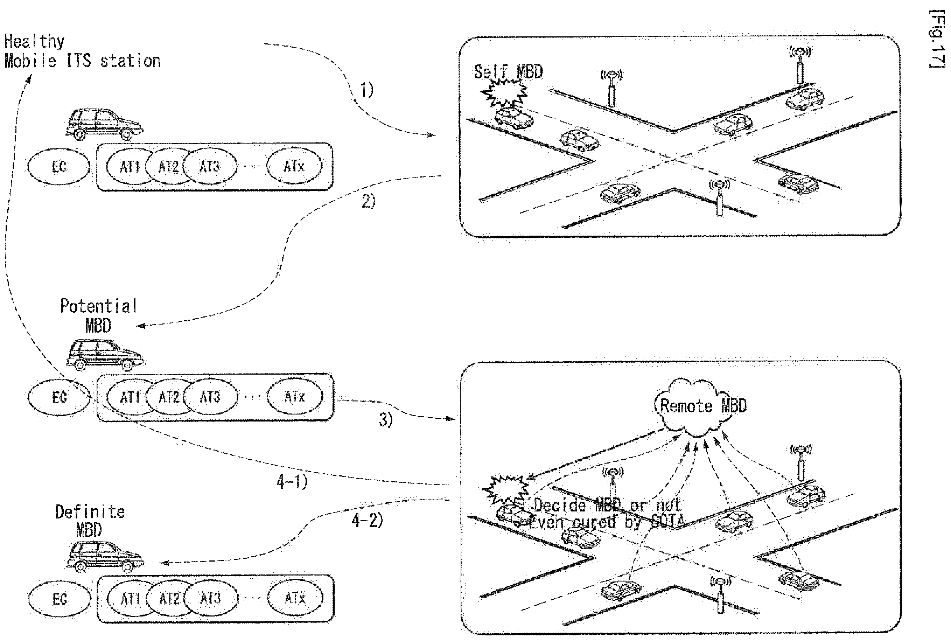

FIG. 17 illustrates an MBD state of ITS-S and a change process of the MBD state according to an embodiment of the present disclosure.

As described above, the MBD state of the ITS-S may be any one of the healthy state, the potential state, or the definite state.
1) The ITS-S in the healthy state may autonomously detect the misbehavior or the misbehavior of the corresponding ITS-S may be detected by the neighborhood ITS-S. In this case, the ITS-S may change the MBD state from the healthy state to the potential state.
2) The ITS-S (PMBD ITS-S) in the potential state may generate the MBDR. The MBDR may include the encrypted EC and may be signed with a current AT.
3) Thereafter, the PMBD ITS-S may transmit the MBDR to an entity that serves to distribute the CRL like MBB/DC/MA.
4) Further, the PMBD ITS-S may remove the ATs and issuing the new AT may be blocked. Meanwhile, the remote MBD station may decide whether the PMBD ITS-S is the MBD ITS-S. In other words, the remote MBD station may judge whether the ITS-S is in the definite MBD state.
5) When it is decided that the PMBD ITS-S is the MBD ITS, the ITS-S may change the MBD state from the potential state to the definite state. In the case of the ITS-S in the definite state, the EC for the corresponding ITS-S may be disabled in the EA.

Alternatively, the PMBD ITS-S may be cured by SOTA. In this case, the ITS-S may change the MBD state from the potential state to the health state.

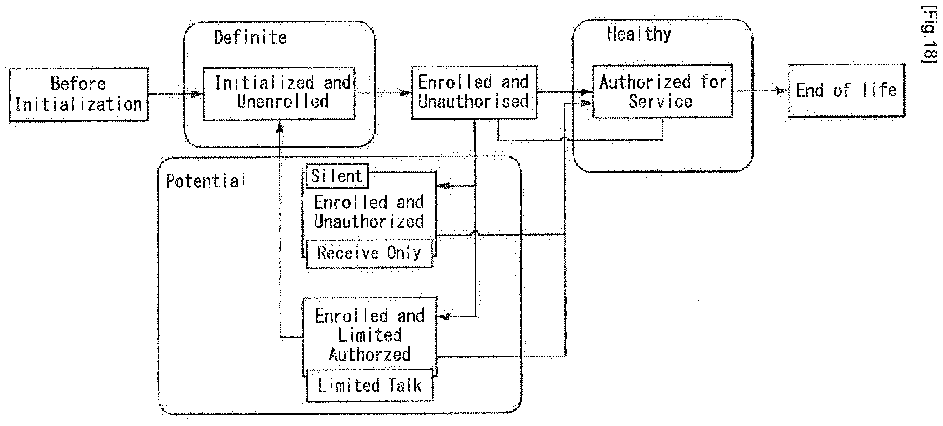

FIG. 18 illustrates a secure life cycle of ITS-S according to an embodiment of the present disclosure. In the embodiment of FIG. 18, two states (steps) may be added as compared to the embodiment of FIG. 13. In addition, specific states may be represented as the MBD state such as the healthy state, the potential state, or the definite state. In FIG. 18, a description duplicated with contents described above in FIG. 13 will be omitted.

Referring to FIG. 18, the secure life cycle may include a before initialization state, an initialized and unenrolled state (initialized/unenrolled state), an enrolled and unauthorized state (enrolled/unauthorized state), an authorized for service state (authorized state), and an end of life state. Each state of the secure life cycle is described above in FIG. 13.

Meanwhile, the initialized/unenrolled state as a state without the EC may correspond to the definite state described above. The authorized state as a state with the EC and the AT may correspond to the healthy state described above.

Further, the secure life cycle may further include two states corresponding to the potential state described above. For example, the secure life cycle may further include an enrolled and unauthorized state (potential enrolled/unauthorized state) associated with the silent mode and the receive only mode and an enrolled and limited authorized (enrolled/limited authorized state) associated with the limited talk mode.

When it is decided that the ITS-S is the PMBD ITS-S by itself or the neighborhood ITS-S in the authorized state (i.e., when the MBD state is changed from the healthy state to the potential state), the state of the secure life cycle may be changed from the authorized state to the enrolled/unauthorized state. In this case, according to the MBD level, the enrolled/unauthorized state may correspond to one of the potential enrolled/unauthorized state or the enrolled/limited authorized state. When the remote MBD station decides that the PMBD ITS-S is the MBD ITS-S in the potential enrolled/unauthorized state or the enrolled/limited authorized state (i.e., when the MBD state is changed from the potential state to the definite state), the state of the secure life cycle may be changed from the potential enrolled/unauthorized state or the enrolled/limited authorized state to the initialized/unenrolled state.

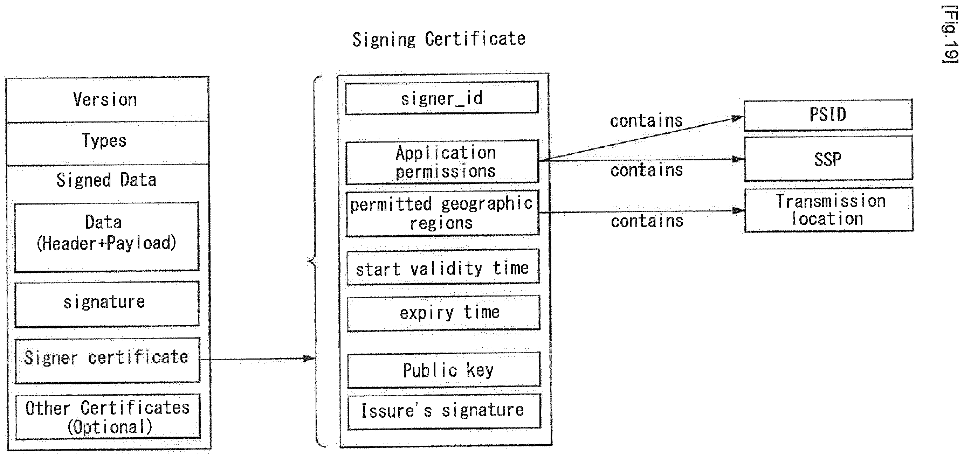

FIG. 19 illustrates signed PDU including MBD related information according to an embodiment of the present disclosure. As the embodiment, FIG. 19 may illustrate signed PDU (SPDU) including MBD related information based on an IEEE 1609.2 standard.

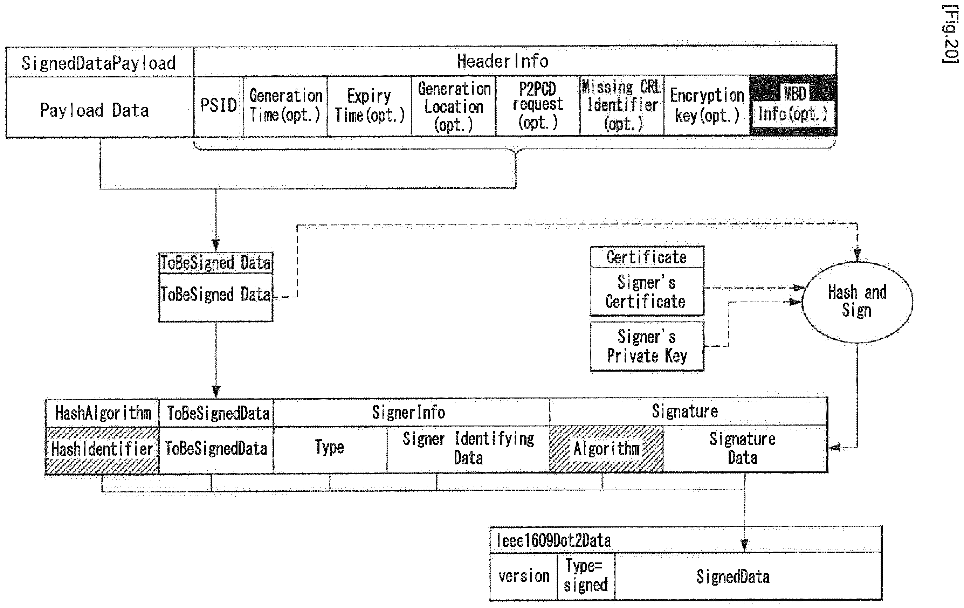

Referring to FIG. 19, the SPDU includes a data part including a header and a payload. Misbehavior detection management (MBM) for managing misbehavior detection may add information (MBD state information) indicating the MBD state to the header of the data part. Therefore, the MBD state information may be included in the header in the data part of the SPDU and transmitted. An exemplary method in which the ITS-S transmits the MBD information through the SPDU will be described below with reference to FIG. 20.

FIG. 20 illustrates a method in which ITS-S transmits MBD related information by using signed PDU according to an embodiment of the present disclosure. As the embodiment, FIG. 20 may illustrate SPDU including MBD information based on an IEEE 1609.2 standard.

Referring to FIG. 20, the ITS-S may configure the SPDU including the payload and the header. An MBD information (MBD info) field including the MBD related information may be optionally added to the header. This is to encapsulate the MBD related information such as corresponding MBD state information even in any case because actual messages include three types such as unencrypted, encrypted, and signed messages. The MBD information field corresponds to an optional field. When there is no MBD information field in the received message, the receiving ITS-S may judge the corresponding message as the message transmitted from the ITS-S in the healthy state. The description of the fields included in the header is as follows.

PSID: as service provider ID, may be assigned with a new PSID value for MBD
generationTime: message generation time
expiryTime: message expiry time
generationLocation: message generation location information as the embodiment, may be used for the purpose of excluding a message which is too far away by the receiver.

P2PCDrequest: ID used at the time of a peer to peer learning request. ID values for coping with multiple requests
MissingCrlldentifier: used at the time of transmission in order to distinguish missed CLR
EncryptionKey: encryption key
MBD info: includes the MBD information including information indicating the MBD state
When the payload and the header information are configured, data (ToBiSignedData) 1603 to be signed is configured as illustrated in Clause (1) of FIG. 16. The data to be signed may be included in a part of the signed data (SignedData) of IEEE 1609.2 as illustrated in Clause (2) as the embodiment. Further, the data to be signed may be used even as input data for creating a signature.

In Clause (3), the signature may be generated through hash and sign.

The hash and the sign may be performed like signing and verification using general asymmetric cryptography. In other words, the ITS-S inputs data to be transmitted as an input of a predetermined hash function and acquires a hash value which is an output result. In addition, the ITS-S generates the signature using an electronic signature algorithm by using the hash value and a private key.

After all, when the SPDU is configured as such, the receiver that receives a final SPDU generated by the ITS-S computes parsed ToBeSignedData as the input of the same hash function again to acquire the hash value. In addition, validation such as intermediate forgery of the message may be performed by using the acquired hash value, the received signature, and a public key of an ACPD sender.

In Clause (4) of FIG. 20, upon receiving the corresponding message, a transmitting side adds Hashldentifier to ToBeSignedData in order to announce which hash algorithm is used and adds information and the signature of a signer behind ToBeSignedData which is the payload. When final signedData is generated as such, transmission data is generated by adding version information and type information as the header.

The description of the fields included in the Signed Data is as follows.

HashAlgorithm: A hash algorithm field indicates a hash algorithm used for signing and verifying the message.

ToBeSignedData as data to be actually transmitted becomes input data of the hash function for the signature.

Signerldentifier: Signerldentifier indicates which key material is used for message authorization. The Signerldentifier may indicate one of digest, certificate, or self. The digest as a case using Certi.Digest is used when a partner already has Full Certificate. The certificate is selected when the Full Certificate is used. The self is selected when a corresponding user is himself/herself.

Signature: electronic signature

When the potential MBD is judged and the MBD finally judged as the remote MBD (definite MBD) is announced to neighbors, a misbehavior broker (MBB) may be used together with the concept of the MBD.

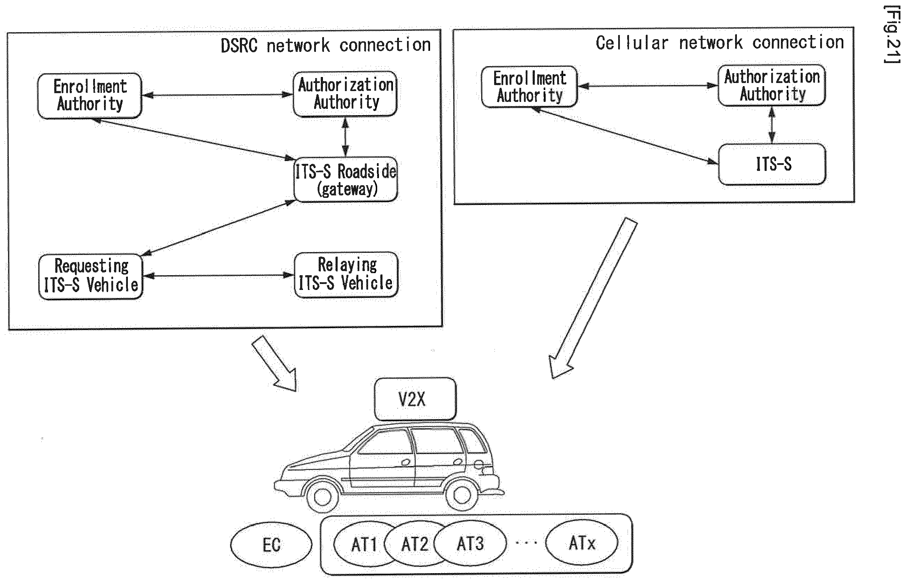

Since all ITS-Ss have different performances, functions, and secure levels, generation and management of the CRL and the misbehavior detection report for all ITS-Ss are burdensome for MA/RCA and DC. Accordingly, a strongly trusted ITS-S such as MBB needs to have an ability and an authority to collect local misbehavior detection, generate the CRL, and distribute the CRL. The MBB is decided to have the authority when the ITS-S is issued with the EC. Hereinafter, referring to FIG. 21, a method in which each of a general ITS-S or the ITS-S which operates as the MBB is issued with the EC will be described.

FIG. 21 illustrates a method in which ITS-S is issued with EC according to an embodiment of the present disclosure.

In the embodiment of FIG. 21, a vehicle ITS-S may be issued with the EC and the AT by using DSRC network connection. In this case, the vehicle ITS-S is connected to EA and AA via a roadside ITS-S to be issued with the EC and the AT from the EA and the AA. Alternatively, the vehicle ITS-S may be issued with the EC and the AT by using cellular network connection. In this case, the vehicle ITS-S is directly connected to the EA and the AA to be issued with the EC and the AT from the EA and the AA.

FIG. 21(a) illustrates a method in which the ITS-S is issued with only the EC for the V2X communication according to an embodiment of the present disclosure. The ITS-S may be issued with one EC for the V2X communication from the EA by using the DSRC network connection or cellular network connection. The issued EC is used for the V2X communication and does not have the authority for the MBB.

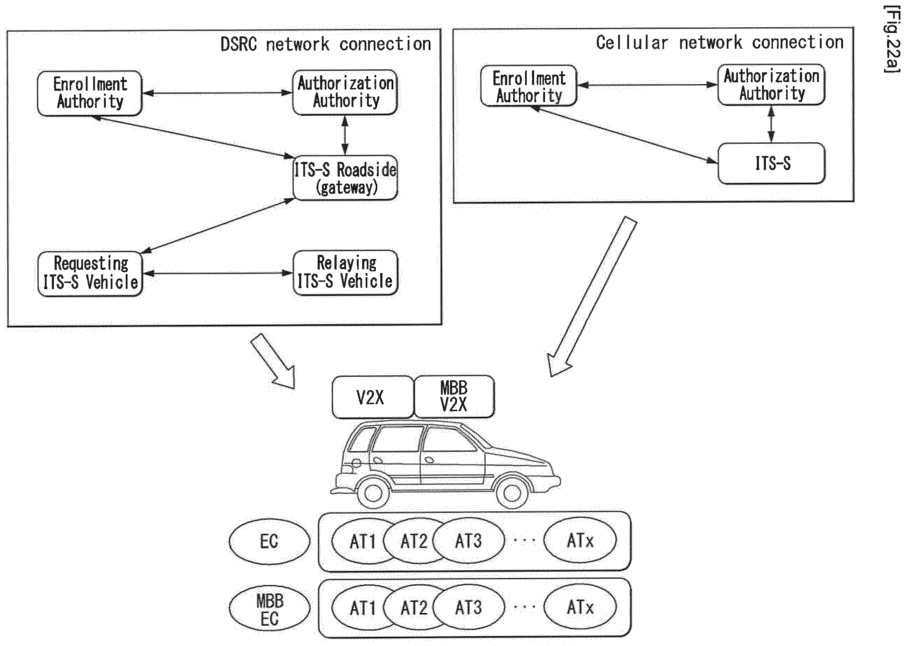

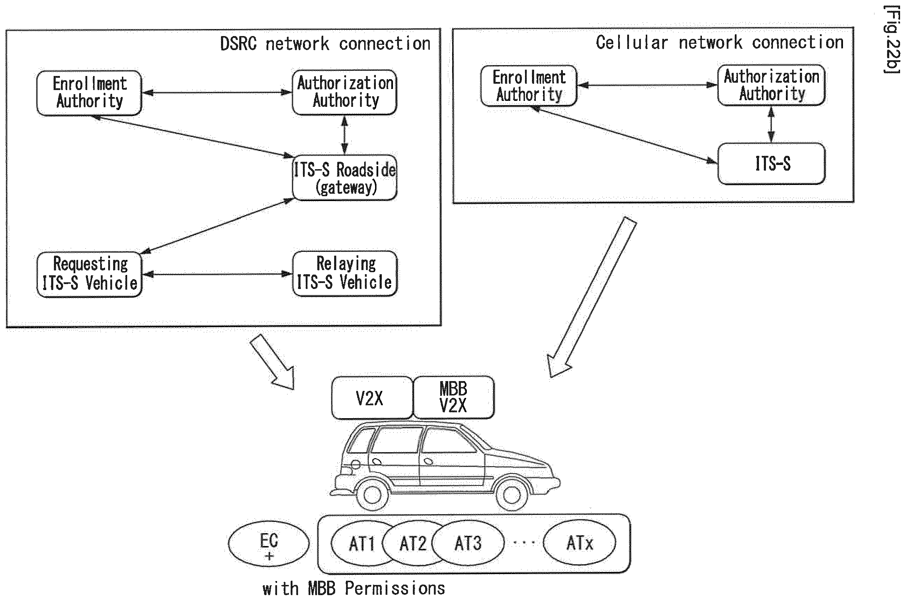

FIG. 22 illustrates a method in which ITS-S operating as MBB is issued with EC according to an embodiment of the present disclosure.

In each embodiment of FIG. 22, the vehicle ITS-S may be issued with the EC and the AT by using DSRC network connection. In this case, the vehicle ITS-S is connected to the EA and the AA via the roadside ITS-S to be issued with the EC and the AT from the EA and the AA. Alternatively, the vehicle ITS-S may be issued with the EC and the AT by using the cellular network connection. In this case, the vehicle ITS-S is directly connected to the EA and the AA to be issued with the EC and the AT from the EA and the AA.

FIG. 22(a) illustrates a method in which the ITS-S is separately issued with the EC for the V2X communication and an EC for an MBB operation according to an embodiment of the present disclosure. The ITS-S may be issued with a plurality of ECs from the EA by using the DSRC network connection or cellular network connection. For example, the ITS-S may be additionally issued with the EC (MBB EC) for the MBB operation in addition to the EC for the V2X communication. The issued MBB EC may be used for the ITS-S to operate as the MBB.

FIG. 22(b) illustrates a method in which the ITS-S is issued with one EC for the V2X communication and the MBB operation according to an embodiment of the present disclosure. The ITS-S may be issued with one EC for the V2X communication and the MBB operation from the EA by using the DSRC network connection or cellular network connection. The issued EC may have MBB permission and may be used for the V2X communication and the MMB operation. In this case, the EC having the MBB permission serves as a general EC in a general V2X operation and serves as the MBB EC in the MBB operation.

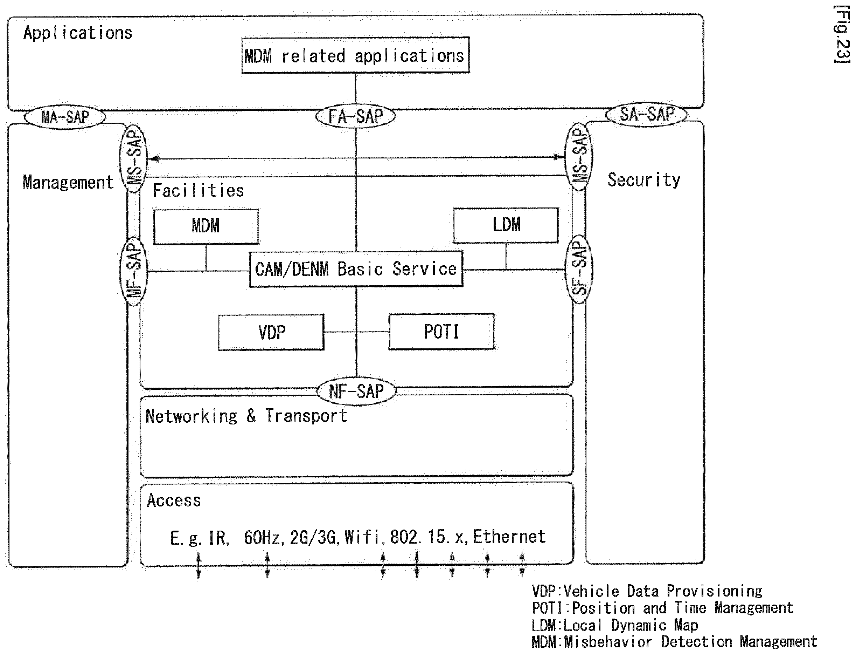

FIG. 23 illustrates an ITS reference architecture for providing an MBD service according to an embodiment of the present disclosure.

Referring to FIG. 23, an application layer may further include an MDM related application for providing the MBD service. Further, a facility layer of the ITS-S may further include an MDM entity for misbehavior detection management. The MDM entity may manage misbehavior detection and distribution. For example, the MDM entity configures an ITS message including MBD related information according to an instruction of the MDM related application to transfer the configured ITS message to networking and transport layers.

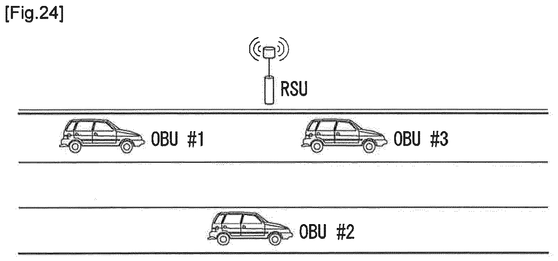

FIG. 24 illustrate an MBB and MBD communication method according to an embodiment of the present disclosure.

In the embodiment of FIG. 24, it is assumed that a first ITS-S (OBU #1) operates as the ITS-S which operates as the MBB and it is assumed that a third ITS-S (OBE #3) is an ITS-S in which the misbehavior is detected of itself or the neighborhood ITS-S. Further, it is assumed that a second ITS-S(OBE #2) is an ITS-S that performs the V2X communication with the first ITS-S and the third ITS-S.

Referring to FIG. 24, the first ITS-S may announce that the first ITS-S is the MBB by using MBB announcement (MBBA).

The third ITS-S may detect that the third ITS-S is the MBD by using the self MBD detecting method and transmit to the first ITS-S as the MBB a message indicating that the third ITS-S is the MBD by using the MBDR. Further, the third ITS-S may revoke the certificate (e.g., ATs) thereof by itself.

The first ITS-S may generate a CBR based on the message received from the third ITS-S and broadcast the generated CBR.

The second ITS-S may delete ATs in a vehicle trust list. In this case, the second ITS-S may delete ATs for the second ITS-S in the vehicle trust list based on the received CRL.

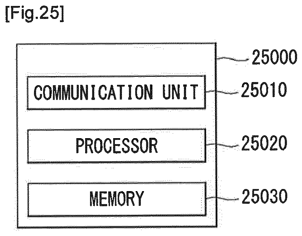

FIG. 25 illustrates a configuration of a V2X communication device according to an embodiment of the present disclosure.

In FIG. 25, a V2X communication device 25000 may include a communication unit 25010, a processor 25020, and a memory 25030.

The communication unit 25010 is connected to the processor 25020 to transmit/receive a radio signal. The communication unit 25010 may transmit a signal by upconverting data received from the processor 25020 to a transmission/reception band or downconvert a received signal. The communication unit 25010 may implement at least one operation between a physical layer or an access layer.

The communication unit 25010 may include multiple sub RF units for communicating in accordance with multiple communication protocols. As the embodiment, the communication unit 25010 may perform data communication based on Dedicated Short Range Communication (DSRC), IEEE 802.11 and/or 802.11p standard-based communication technology, ITS-G5 wireless communication technology based on physical transmission technology of the IEEE 802.11 and/or 802.11p standards, 2G/3G/4G (LTE)/5G wireless cellular communication technology including satellite/broadband wireless mobile communication, broadband terrestrial digital broadcasting technology such as DVB-T/T2/ATSC, GPS technology, IEEE 1609 WAVE technology, and the like. The communication unit 25010 may include a plurality of transceivers implementing each communication technology.

The processor 25020 is connected with the communication unit 25010 to implement the operations of the layers according to the ITS system or the WAVE system. The processor 25020 may be configured to perform operations in accordance with various embodiments of the present disclosure in accordance with the aforementioned drawings and descriptions. Further, at least one of a module, data, a program, or software that implements the V2X communication device 25000 according to various embodiments of the present disclosure may be stored in the memory 25030 and executed by the processor 25020.

The memory 25030 is connected with the processor 25020 to store various pieces of information for driving the processor 25020. The memory 25030 is included in the processor 25020 or installed outside the processor 25020 to be connected with the processor 25020 by a known means.

The processor 25020 of the V2X communication device 25000 may perform the misbehavior detection described in the present disclosure and the resulting operation. This will be described below.

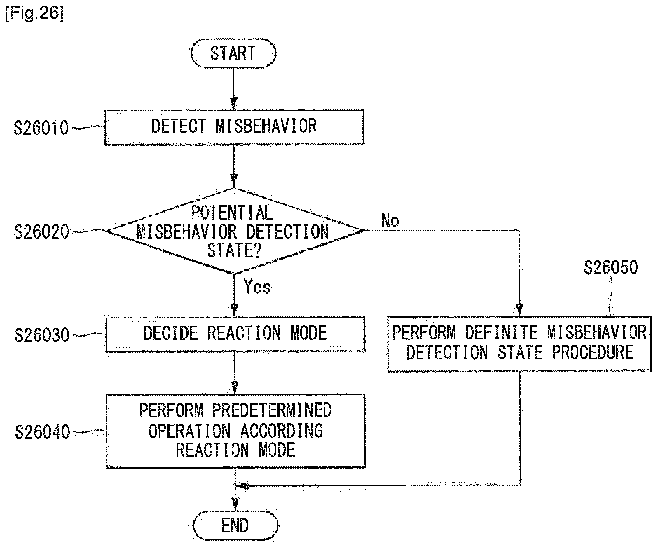

FIG. 26 illustrates a communication method of a V2X communication device according to an embodiment of the present disclosure.

The V2X communication device may detect the misbehavior of the V2X communication device (S26010). As the embodiment, the V2X communication device may detect the misbehavior by using one of the self MBD detecting method, the neighborhood MBD detecting method, or the remote MBD detecting method.

The V2X communication device may decide whether the V2X communication device is in the potential misbehavior detection (MBD) state . As the embodiment, when the misbehavior of the V2X communication device is detected by the V2X communication device itself or when the misbehavior of the V2X communication device is detected by the neighborhood V2X communication device in the vicinity of the V2X communication device, the V2X communication device may decide that the V2X communication device is in the potential MBD state. In other words, when the misbehavior is detected by the self MBD detecting method or the neighborhood MBD detecting method, the V2X communication device may decide that the V2X communication device is in the potential MBD state.

As the embodiment, the neighborhood V2X communication device may be a V2X communication device which operates as a misbehavior broker (MBB) generating certificate revocation list (CRL) information. The neighborhood V2X communication device which operates as the MBB may broadcast the CRL information. In this case, the CRL information may include information for revoking the certificate of the V2X communication device.

When the V2X communication device is in the potential misbehavior detection state, the V2X communication device may decide the reaction mode of the V2X communication device (26030). As the embodiment, the reaction mode may include at least one of a first mode for deactivating a V2X communication function of the V2X communication device, a second mode for activating only a reception function of the V2X communication device, and a third mode for activating the reception function and a limited transmission function of the V2X communication device. In this case, the first mode, the second mode, and the third mode correspond to the silent mode, the receive only mode, and the limited talk mode, respectively.

The V2X communication device may perform a predetermined operation according to the reaction mode. For example, when the reaction mode is the first mode, the V2X communication device may revoke the certificates (e.g., ATs) for verifying the message and deactivate transmission and reception functions of the V2X message. Alternatively, when the reaction mode is the second mode, the V2X communication device may revoke the certificates (e.g., ATs) for verifying the V2X message and deactivate the transmission function of the V2X message. Alternatively, when the reaction mode is the third mode, the V2X communication device may activate a limited transmission function of the V2X communication device. Here, the limited transmission function may be used for transmission of a predefined specific V2X message. As the embodiment, the specific V2X message may include information indicating that the V2X communication device is in the potential misbehavior detection state.

When the V2X communication device is not in the potential misbehavior detection state (i.e., when the V2X communication device is in the V2X definite misbehavior detection (MBD) state), the V2X communication device may perform a definite MBD state procedure. This is described above.

In the embodiments described above, the components and the features of the present disclosure are combined in a predetermined form. Each component or feature should be considered as an option unless otherwise expressly stated. Each component or feature may be implemented not to be associated with other components or features. Further, the embodiment of the present disclosure may be configured by associating some components and/or features. The order of the operations described in the embodiments of the present disclosure may be changed. Some components or features of any embodiment may be included in another embodiment or replaced with the component and the feature corresponding to another embodiment. It is apparent that the claims that are not expressly cited in the claims are combined to form an embodiment or be included in a new claim by an amendment after the application.

The embodiments of the present disclosure may be implemented by hardware, firmware, software, or combinations thereof. In the case of implementation by hardware, according to hardware implementation, the exemplary embodiment described herein may be implemented by using one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

In the case of implementation by firmware or software, the embodiment of the present disclosure may be implemented in the form of a module, a procedure, a function, and the like to perform the functions or operations described above. A software code may be stored in the memory and executed by the processor. The memory may be positioned inside or outside the processor and may transmit and receive data to/from the processor by already various means.

It is apparent to those skilled in the art that the present disclosure may be embodied in other specific forms without departing from essential characteristics of the present disclosure. Accordingly, the aforementioned detailed description should not be construed as restrictive in all terms and should be exemplarily considered. The scope of the present disclosure should be determined by rational construing of the appended claims and all modifications within an equivalent scope of the present disclosure are included in the scope of the present disclosure.

### [Mode for Invention]

It will be understood by those skilled in the art that various changes and modifications can be made therein without departing from the spirit or scope of the invention. Accordingly, it is intended that the present disclosure cover the modifications and variations of the present disclosure provided they come within the scope of the appended claims and their equivalents.

In the present specification, all apparatus and method inventions are herein mentioned and descriptions of both apparatus and method inventions can be supplemented and applied to each other.

Various embodiments are described in a best mode for carrying out the present disclosure.

### [Industrial Applicability]

The present disclosure may be used in a series of smart car/connected car fields or V2X communication fields.

It will be apparent to those skilled in the art that various changes and modifications can be made therein without departing from the spirit or scope of the present disclosure. Accordingly, it is intended that the present disclosure cover the modifications and variations of the present disclosure provided they come within the scope of the appended claims and their equivalents.

## Claims

1. A V2X communication method of a V2X communication device, comprising:
detecting misbehavior of the V2X communication device;
determining whether the V2X communication device is in a potential misbehavior detection state;
determining a reaction mode of the V2X communication device when the V2X communication device is in the potential misbehavior detection state; and
performing a predetermined operation according to the reaction mode,
wherein the reaction mode includes at least one of a first mode for deactivating a V2X communication function of the V2X communication device, a second mode for activating only a reception function of the V2X communication device, and a third mode for activating the reception function and a limited transmission function of the V2X communication device.

2. The V2X communication method of claim 1, wherein in the determining of whether the V2X communication device is in the potential misbehavior detection state,
when the misbehavior of the V2X communication device is detected by the V2X communication device itself or when the misbehavior of the V2X communication device is detected by a neighborhood V2X communication device in the vicinity of the V2X communication device, it is determined that the V2X communication device is in the potential misbehavior detection state.

3. The V2X communication method of claim 1, wherein the performing of the predetermined operation according to the reaction mode when the reaction mode is the first mode includes
revoking certificates for verifying a V2X message, and
deactivating transmission and reception functions of the V2X message.

4. The V2X communication method of claim 1, wherein the performing of the predetermined operation according to the reaction mode when the reaction mode is the second mode includes
revoking the certificates for verifying the V2X message, and
deactivating the transmission function of the V2X message.

5. The V2X communication method of claim 1, wherein the performing of the predetermined operation according to the reaction mode when the reaction mode is the third mode includes
activating a limited transmission function of the V2X communication device, and
wherein the limited transmission function is used for transmission of a predefined specific V2X message and the specific V2X message includes information indicating that the V2X communication device is in the potential misbehavior detection state.

6. The V2X communication method of claim 2, wherein the neighborhood V2X communication device is a V2X communication device which operates as a misbehavior broker generating certificate revocation list (CRL) information.

7. The V2X communication method of claim 6, wherein the neighborhood V2X communication device broadcasts the CRL information and the CRL information includes information for revoking the certificate of the V2X communication device.

8. A V2X communication device comprising:
a secure/non-secure storage device storing data;
an RF unit transmitting and receiving a radio signal; and
a processor controlling the RF unit,
wherein the processor is configured to:
determine whether the V2X communication device is in a potential misbehavior detection state,
determine a reaction mode of the V2X communication device when the V2X communication device is in the potential misbehavior detection state, and
perform a predetermined operation according to the reaction mode, and
wherein the reaction mode includes at least one of a first mode for deactivating a V2X communication function of the V2X communication device, a second mode for activating only a reception function of the V2X communication device, and a third mode for activating a limited transmission function of the V2X communication device.

9. The V2X communication device of claim 8, wherein in the determining of whether the V2X communication device is in the potential misbehavior detection state,
when the misbehavior of the V2X communication device is detected by the V2X communication device itself or when the misbehavior of the V2X communication device is detected by a neighborhood V2X communication device in the vicinity of the V2X communication device, it is determined that the V2X communication device is in the potential misbehavior detection state.

10. The V2X communication device of claim 8, wherein the performing of the predetermined operation according to the reaction mode when the reaction mode is the first mode includes
revoking the certificates for verifying the V2X message, and
deactivating transmission and reception functions of the V2X message.

11. The V2X communication device of claim 8, wherein the performing of the predetermined operation according to the reaction mode when the reaction mode is the second mode includes
revoking the certificates for verifying the V2X message, and
deactivating the transmission function of the V2X message.

12. The V2X communication device of claim 8, wherein the performing of the predetermined operation according to the reaction mode when the reaction mode is the third mode includes
activating a limited transmission function of the V2X communication device, and
wherein the limited transmission function is used for transmission of a predefined specific V2X message and the specific V2X message includes information indicating that the V2X communication device is in the potential misbehavior detection state.

13. The V2X communication device of claim 9, wherein the neighborhood V2X communication device is a V2X communication device which operates as a misbehavior broker generating certificate revocation list (CRL) information.

14. The V2X communication device of claim 13, wherein the neighborhood V2X communication device broadcasts the CRL information and the CRL information includes information for revoking the certificate of the V2X communication device.
